(19) Europäisches Patentamt
European Patent Office
Office européen des brevets

(11) Numéro de publication: **0 136 929**
**A2**

(12) # DEMANDE DE BREVET EUROPEEN

(21) Numéro de dépôt: 84401628.7

(51) Int. Cl.[4]: G 06 F 15/68

(22) Date de dépôt: 03.08.84

(30) Priorité: 04.08.83 FR 8312898

(43) Date de publication de la demande: 10.04.85 Bulletin 85/15

(84) Etats contractants désignés: DE GB NL

(71) Demandeur: THOMSON-CSF
173, Boulevard Haussmann
F-75379 Paris Cedex 08(FR)

(72) Inventeur: Richard, Christian
THOMSON-CSF SCPI 173, bld Haussmann
F-75379 Paris Cedex 08(FR)

(74) Mandataire: Turlèque, Clotilde et al,
THOMSON-CSF SCPI 173, Bld Haussmann
F-75379 Paris Cedex 08(FR)

(54) **Procédé de discrimination des contours et des textures dans une image vidéo et dispositif détecteur de contour pour la mise en oeuvre de ce procédé.**

(57) Le dispositif comporte des moyens (2) de détection des points à fort gradient, recevant une valeur de luminance pour chaque point d'une image et la comparant à celle des points voisins, des moyens (3) de détermination d'une valeur $N_z$ minorant du nombre des points contenus dans la zone de points à fort gradient connexes contenant le point considéré, des moyens (4) de détermination d'une première estimation du type du point considéré, comparant la valeur $N_z$ par rapport à une valeur seuil $N_{S2}$, le point étant estimé être un point de contour si $N_z > N_{S2}$, ou être un point de texture si $N_z \leq N_{S2}$; des moyens (5 et 6) de détermination d'une deuxième et d'une troisième estimation en fonction du type estimé des points à fort gradient voisins sur la même ligne, et sur la ligne suivante; des moyens (7) de détermination d'une quatrième estimation en fonction du type estimé des points à fort gradient suivant le point considéré sur la même ligne; et des moyens (8) de détermination d'une cinquième estimation en fonction du type estimé du point homologue sur la ligne précédente. Les cinq estimations successives permettent de déterminer avec une certitude croissante si un point à fort gradient est un point de contour ou bien un point de texture.

Application aux traitements d'images vidéo.

EP 0 136 929 A2

./...

Croydon Printing Company Ltd

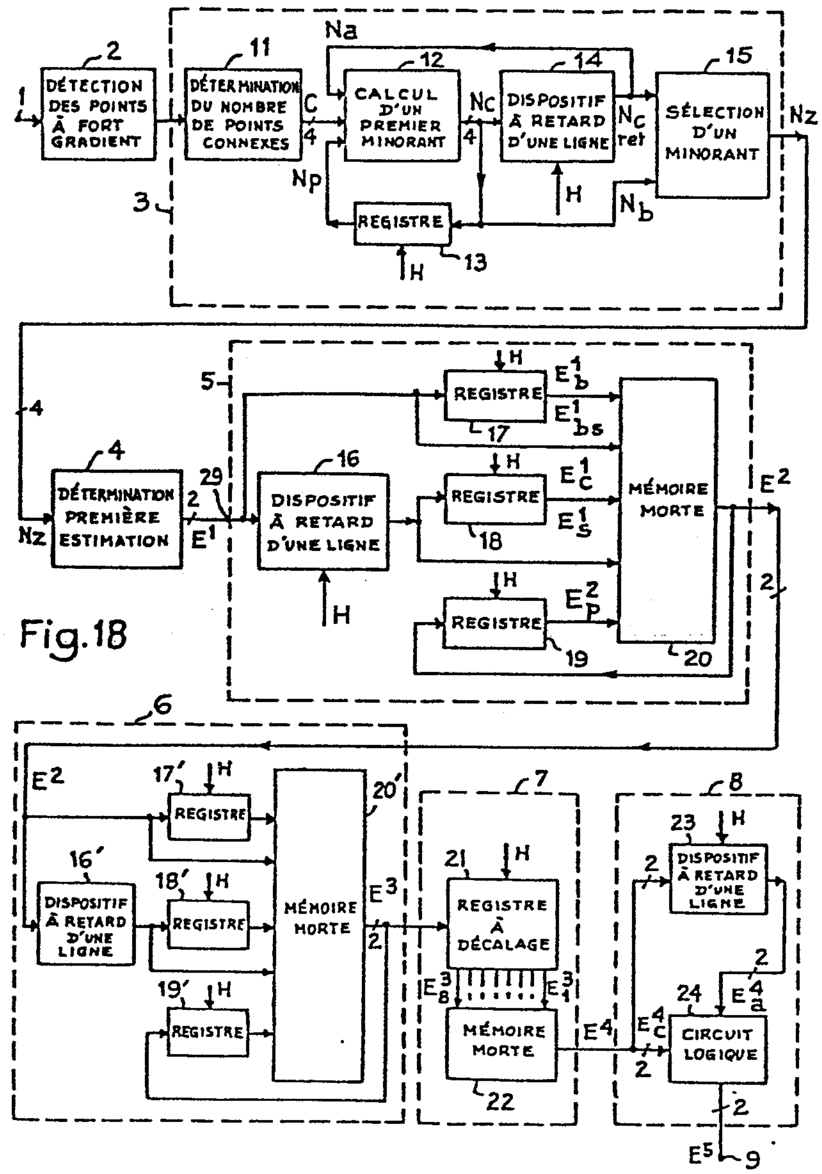
DÉTECTION DES POINTS À FORT GRADIENT
DÉTERMINATION DU NOMBRE DE POINTS CONNEXES
CALCUL D'UN PREMIER MINORANT
DISPOSITIF À RETARD D'UNE LIGNE
SÉLECTION D'UN MINORANT
REGISTRE
Na
Nc
Np
Nb
Nz
Nc ret
H
DÉTERMINATION PREMIÈRE ESTIMATION
DISPOSITIF À RETARD D'UNE LIGNE
REGISTRE
MÉMOIRE MORTE
$E^1$
$E^1_b$
$E^1_{bs}$
$E^1_c$
$E^1_s$
$E^2_p$
$E^2$
DISPOSITIF À RETARD D'UNE LIGNE
MÉMOIRE MORTE
$E^3$
REGISTRE À DÉCALAGE
$E^3_8$
$E^3_1$
MÉMOIRE MORTE
$E^4$
DISPOSITIF À RETARD D'UNE LIGNE
CIRCUIT LOGIQUE
$E^4_a$
$E^4_c$
$E^5$

Fig.18

# Procédé de discrimination des contours et des textures dans une image vidéo et dispositif détecteur de contour pour la mise en oeuvre de ce procédé

Une image vidéo d'un objet comporte des zones représentant les contours de cet objet et des zones représentant la texture des différentes parties de cet objet. En outre, du bruit superpose à cette image des petites zones dont les points ont des caractéristiques aléatoires. Le procédé selon l'invention permet de discriminer parmi les points de l'image ceux qui appartiennent à des contours et ceux qui appartiennent à des textures ou qui sont affectés par le bruit. Le dispositif selon l'invention fournit pour chaque point d'image un signal indiquant le type de ce point, c'est-à-dire un point de contour ou un point de texture. Les points affectés par le bruit sont considérés, dans ce qui suit, comme des points de texture.

La demande de brevet français n° 79 16914 décrit un dispositif pour réaliser une estimation récursive de l'état local des contours d'images, et son application à un codage différentiel à prédiction adaptative. Ce dispositif, non seulement détecte les points appartenant à des contours, mais aussi réalise une estimation de l'orientation de ces contours en vue d'optimiser la prédiction utilisée pour un codage différentiel des images. A cause de la complexité du procédé, la réalisation d'un dispositif fonctionnant en temps réel est très délicate. D'autre part, le procédé mis en oeuvre est inutilement complexe pour des applications où il est seulement nécessaire de détecter les points des contours sans rechercher l'orientation de ces contours. Le procédé selon l'invention permet de réaliser cette détection d'une manière simple permettant une mise en oeuvre facile en temps réel.

Selon l'invention, un procédé de discrimination des contours et des textures dans une image vidéo, est caractérisé en ce qu'il consiste : à détecter les points d'une image, dits points à fort gradient, dont le gradient de luminance a une valeur supérieure à une valeur fixée ; et en ce qu'il consiste, pour chaque point à fort gradient, à déterminer un

minorant $N_z$ du nombre de points d'une zone constituée de points à fort gradient connexes, où est situé le point considéré, à faire au moins p estimations du type du point considéré :

- une première estimation effectuée en comparant la valeur $N_z$ à une valeur $N_{S2}$ fixée ($N_{S2}$ entier positif), le point étant estimé être un point de contour, si $N_z > N_{S2}$ et un point de texture si $N_z \ll N_{S2}$ ;

- p-2 estimations successives, chacune étant réalisée en fonction du type, estimé précédemment, des points à fort gradient connexes au point considéré et appartenant à la même ligne ou à la ligne suivante, p étant un nombre entier inférieur ou égal à $N_{S2}$ ;

- une $p^{ième}$ estimation en fonction du type estimé précédemment, de N' points suivant immédiatement le point considéré sur la même ligne, N' étant un nombre entier fixé tel que $N' \gg N_{S2} - p$ ; le point considéré étant estimé être un point de contour s'il a précédemment été estimé être un point de contour ou s'il y a parmi ces N' points au moins un point à fort gradient connexe au point considéré, et s'il y a parmi ces points à fort gradient connexes au point considéré au moins un point de contour ; et le point considéré étant estimé être un point de texture dans les autres cas ; et à discriminer les points de contour et les points de texture d'après le résultat de la dernière estimation réalisée.

L'invention sera mieux comprise et d'autres détails apparaîtront à l'aide de la description ci-dessous et des figures l'illustrant.

- Les figures 1 à 10 illustrent l'application d'une première variante du procédé selon l'invention à un exemple d'image.

- Les figures 11 à 17 illustrent l'application d'une seconde variante du procédé selon l'invention, à ce même exemple d'image.

- La figure 18 représente le schéma synoptique d'un exemple de réalisation du dispositif selon l'invention.

- La figure 19 représente un schéma synoptique plus détaillé d'une partie de cet exemple de réalisation.

- La figure 20a représente un schéma synoptique plus détaillé d'une autre partie de cet exemple de réalisation.

- La figure 20b illustre le fonctionnement de cette autre partie.

Dans un exemple de réalisation du procédé selon l'invention l'estimation du type de chaque point d'une image est réalisée en cinq étapes, chaque étape consistant en une estimation plus certaine que l'estimation réalisée au cours de l'étape précédente. Le déroulement de la première estimation est le suivant :

Chaque point d'une image est représenté par la valeur de sa luminance. Cette valeur de luminance est comparée par rapport à celle des points voisins sur la même ligne et sur les lignes voisines. Si elles sont très différentes le point est dit à fort gradient, et si elles sont identiques à une tolérance près le point est dit à faible gradient. La figure 1 représente un exemple d'image où chaque point est représenté par une valeur binaire, égale à 1 lorsque le gradient de la luminance en ce point a une forte valeur et égale à 0 dans le cas contraire c'est-à-dire lorsque le point est fixe. En général les points à fort gradient ne sont pas isolés mais connexes, et constituent des zones compactes. Les points de texture sont groupés en zones comportant un petit nombre de points, alors que les points de contour sont groupés en zones dont le nombre de points est très supérieur. Une estimation du type d'un point à fort gradient peut donc être réalisée en déterminant le nombre de points de la zone à laquelle il appartient, et en le comparant à une valeur seuil $N_{S2}$. Dans cet exemple $N_{S2} = 6$, mais ce nombre peut être choisi différemment en fonction du type d'images et en fonction de la taille des contours qu'il est nécessaire de détecter pour une application donnée. La détermination du nombre exact de points contenus dans chacune des zones de points à fort gradient d'une image est relativement complexe et n'est pas indispensable dans l'application considérée. Il suffit de déterminer pour chacune des zones si son nombre de points est supérieur à la valeur $N_{S2}$. Dans le cas le plus défavorable une zone contient $N_{S2}+1$ points situés sur une ligne perpendiculaire aux lignes de balayage de l'image. Pour détecter une telle zone il suffit donc de prendre en compte au moins un nombre $N_{S2}+1$ de lignes, ce nombre est très inférieur au nombre total de lignes d'une image. L'expérience montre que les zones de points de texture ont une forme allongée parallèle aux lignes et ne s'étendent pratiquement jamais sur plus de quatre lignes. C'est pourquoi dans cet exemple de réalisation du procédé selon l'invention l'estimation du type d'un point est réalisée en ne

considérant que le type des points voisins situés à une distance inférieure ou égale à quatre lignes d'image. Le nombre de lignes prises en compte est lié au nombre des estimations réalisées, comme il apparaîtra dans la suite. Les points sont traités successivement dans l'ordre où ils ont été analysés. Les cinq estimations sont réalisées successivement pour chaque point à fort gradient avec un intervalle de temps entre deux estimations inférieur ou égal à la durée d'analyse d'une ligne plus un point d'image. La première estimation consiste d'abord à déterminer pour le point considéré la valeur $N_z$ d'un minorant du nombre de points de la zone de points à fort gradient à laquelle appartient le point considéré. Cette valeur $N_z$ est déterminée en deux étapes :

Un premier calcul détermine une valeur $N_c$ d'un premier minorant du nombre des points à fort gradient connexes au point courant sur la même ligne ou les lignes précédentes, et cinq cas sont à distinguer :

1er cas : le point considéré est le premier point d'un ensemble de points à fort gradient connexes sur une même ligne, et le point homologue sur la ligne précédente n'est pas à fort gradient. Le minorant $N_c$ est alors pris égal à un nombre C minorant du nombre de points connexes au point considéré et le suivant sur la même ligne. Le nombre C est égal au nombre des points appartenant à l'ensemble de points connexes suivant le point considéré sur la même ligne, avec une limitation à la valeur 8, car c'est suffisant pour détecter les zones ayant plus de 6 points. Dans l'exemple de la figure 1 à la deuxième ligne, septième colonne :

```
  0                    Nc = C = 4
0[1]1 1 1 0 0 1
```

Le point considéré est encadré.

2ème cas : le point considéré est un point d'un ensemble de points à fort gradient connexes sur une même ligne, sans être son premier point, et le point homologue sur la ligne précédente n'est pas à fort gradient. Le minorant $N_c$ est alors égal au minorant $N_p$ calculé pour le point immédiatement précédent. Dans l'exemple de la figure 1 à la deuxième ligne, huitième colonne :

```
    0                  Nc = Np = 4
0 1[1]1 1 0 0 1
```

3ème cas : Le point considéré est le premier point d'un ensemble de points à fort gradient connexes sur une même ligne, et le point homologue sur la ligne précédente est à fort gradient, le nombre de points de la zone du point homologue ayant pour minorant une valeur $N_a$. Le minorant $N_c$ est alors égal à la somme du nombre C des points appartenant à l'ensemble de points connexes, avec une limitation à 8, et du minorant $N_a$. Dans l'exemple de la figure 1 ce cas est rencontré à la troisième ligne, puis à la quatrième ligne, à la dixième colonne :

```
1 1 1 1                 Nc = Na + C = 4 + 1 = 5
  0[1]0
```

$N_c = N_a + C = 4 + 1 = 5$

```
1 1 1 1
   0 1 0                Nc = Na + C = 5 + 8 = 13
   0[1]1 1 1 1 1 1 1
```

$N_c = N_a + C = 5 + 8 = 13$

4ème cas : Le point considéré appartient à un ensemble de points à fort gradient connexes sur une même ligne, sans être le premier point de cet ensemble, le point homologue sur la ligne précédente est à fort gradient, le nombre de points de la zone du point homologue ayant pour minorant $N_a$, et le point précédent ce point homologue n'est pas à fort gradient. Le minorant $N_c$ est alors égal à la somme du minorant $N_p$, calculé pour le point immédiatement précédent, et du minorant $N_a$. En pratique la valeur $N_c$ est limitée à 15. Dans l'exemple de la figure 1 ce cas est rencontré sur la quatrième ligne à la quatorzième colonne :

```
1 1 1 1     1 1 1 1
1     1     0 1
1     1 1 1 1[1]1 1
```

$N_a + N_p = 5 + 12 = 17$

mais $N_c$ est limité à 15.

5ème cas : le point considéré appartient à un ensemble de points à fort gradient connexes sur une même ligne, sans être le premier point de cet ensemble, le point homologue sur la ligne précédente est à fort gradient, et le point qui précède ce point homologue est lui aussi à fort gradient. Le minorant $N_c$ est alors simplement égal au minorant $N_p$ calculé pour le point précédant le point considéré, le calcul effectué antérieurement pour ce minorant ayant tenu compte des points à fort

gradient situés sur les lignes précédentes. Ce cas est rencontré à la sixième ligne, cinquième colonne, de l'exemple de la figure 1.

$$N_c = N_p = 14$$

```
      1
      1
      1
    1 1 1 1
    1 0 1 [1] 1 1 1 1 1
```

Dans une deuxième étape, la détermination d'un minorant $N_z$ prend en compte le type du point homologue du point considéré sur la ligne suivante :

- si ce point homologue n'est pas à fort gradient $N_z = N_c$.

- si ce point homologue est à fort gradient et si $N_b$ est la valeur trouvée pour ce point homologue dans la première étape de la détermination d'un minorant du nombre de points de sa zone, alors $N_z = N_b$.

Cette deuxième étape de la détermination d'un minorant permet de prendre en compte les points à fort gradient connexes au point considéré sur la ligne suivante, et les points connexes à ceux-ci.

La figure 2 représente les valeurs des minorants $N_c$ calculées pour les points de l'exemple d'image de la figure 1. Dans cet exemple l'analyse et le traitement des points sont réalisés selon un balayage allant de haut en bas et de gauche à droite. Lors de la mise en oeuvre du procédé la limitation de $N_c$, $N_b$ et $N_z$, à 15 permet de limiter la taille des mémoires utilisées sans gêner l'estimation du type des points puisqu'une zone ayant au moins 15 points est une zone de contour. La détermination des minorants $N_z$ nécessite de stocker les valeurs des minorants $N_c$ pendant une durée correspondant à la durée d'une ligne. Ce stockage peut être réalisé par une mémoire dont la capacité correspond à une ligne et comportant quatre bits pour chaque point d'image.

Immédiatement après la détermination de la valeur $N_z$ d'un minorant du nombre de points de la zone à laquelle appartient le point considéré, une première estimation du type de ce point est réalisée en comparant la valeur $N_z$ du minorant par rapport à la valeur fixée $N_{S2}$ qui est égale à 6 dans cet exemple. Si $N_z$ est supérieure ou égale à $N_{S2}$ le point considéré est estimé être un point de contour, et si $N_z$ est inférieure à $N_{S2}$ il est estimé être un point de texture.

La figure 3 représente les valeurs des minorants $N_z$ pour les points de l'exemple d'image de la figure 1. Il apparaît que pour certains points le remplacement de la valeur $N_c$ par la valeur $N_b$ fournit une valeur $N_z$ supérieure à 6 et permet donc de conclure qu'ils sont des points de contour. Par exemple, pour le point situé sur la troisième ligne, dixième colonne, $N_z = N_b = 12$ est supérieur à $N_{S2} = 6$ donc le point est estimé être un point de contour. Par contre pour le point situé sur la deuxième ligne, dixième colonne $N_z = N_b = 5$ est inférieur à $N_{S2} = 6$, donc de ce point est estimé être un point de texture, jusqu'à preuve du contraire. Il est clair que cette estimation est inexacte puisque ce point appartient en fait à la même zone de points à fort gradient que le point cité précédemment. Les quatre estimations qui vont suivre permettront de tenir compte du fait que cette zone de points à fort gradient se prolonge sur les lignes qui suivent la deuxième ligne et permettront finalement de conclure que le point situé sur la deuxième ligne, dixième colonne, est un point de contour.

La deuxième estimation est réalisée avec un retard équivalent à une ligne plus un point par rapport à la première estimation et elle consiste à considérer, pour chaque point qui a été estimé être un point de texture, le type estimé des points à fort gradient qui lui sont connexes et qui appartiennent à la même ligne ou à la ligne suivante. Dans les exemples suivants les points où le gradient de luminance est faible sont représentés par "F", les points qui sont estimés être des points de texture, jusqu'à preuve du contraire, sont représentés par "B", et les points qui sont estimés être des points de contour sont représentés par "M". Les points dont les types peuvent être quelconques sont représentés par "X". Le point pour lequel une deuxième estimation est à réaliser est encadré. Il est à remarquer que le type estimé du point précédant le point considéré et appartenant à la même ligne résulte d'une deuxième estimation alors que le type estimé du point suivant sur la même ligne et des points voisins sur la ligne suivante résulte d'une première estimation.

X [B] M
ou X X

M [B] X
X X

ou

X [B] X
M X

ou

X [B] B
X M

Dans chacun de ces exemples le point considéré est un point de contour (M).

La deuxième estimation conclut que ces points sont des points de contour et non pas de texture. En règle générale la deuxième estimation conclut que le point considéré est un point de contour si d'après la première estimation

- le point précédent sur la même ligne,
- ou le point suivant sur la même ligne,
- ou le point homologue sur la ligne suivante, est un point de contour,

ou si, d'après la première estimation, le point suivant le point homologue sur la ligne suivante est un point de contour et le point suivant le point considéré est de texture.

Dans tous les autres cas la deuxième estimation conclut que le point est un point de texture.

Une troisième estimation est réalisée avec un retard équivalent à une ligne plus un point par rapport à la deuxième estimation pour le type d'un même point. Cette estimation est identique à la deuxième.

La quatrième estimation estime le type d'un point en fonction du type de N' points suivant immédiatement le point considéré sur la même ligne. Elle est donc réalisée avec un retard de N' points par rapport à la troisième estimation pour un même point. N' est un nombre entier tel que $N' \geqslant N_{S2} - p$, où p est le nombre d'estimations réalisées, y compris celle considérée. Dans cet exemple $N_{S2} = 6$, $p = 4$ et $N' = 7$. La quatrième estimation est donc réalisée avec un retard correspondant à sept points par rapport à la troisième estimation, pour un même point.

La valeur N' ainsi choisie est suffisamment grande pour permettre de propager vers la gauche le type point de contour, M, plus loin que la

propagation réalisée par les (p-1) estimations précédentes, et suffisamment loin pour pouvoir détecter une zone contenant $N_{S2}$ points à fort gradient. Le nombre p des estimations détermine le nombre de lignes prises en compte dans une zone. Dans cet exemple p = 4 avec la quatrième estimation, il y a donc quatre lignes prises en compte, donc une zone, formée de quatre points à fort gradient connexes et alignés verticalement, peut être détectée. Il est à la portée de l'homme de l'art de choisir un autre nombre d'estimations, p, et une autre valeur de seuil, $N_{S2}$ , en fonction des textures constituant l'image. Si le nombre d'estimations est augmenté, les estimations supplémentaires sont identiques à la deuxième et troisième estimation décrites ci-dessus. La valeur N' est limitée par la complexité de la mise en oeuvre. Dans cet exemple N' = 7 permet une mise en oeuvre simple avec des circuits traitant des octets.

Le point considéré est estimé être un point de contour par la quatrième estimation s'il y a parmi ces N' points au moins un point, à fort gradient, connexe au point considéré, et s'il y a parmi ces points connexes au moins un point qui est un point de contour d'après une estimation précédente.

Si, par exemple, la troisième estimation a donné pour types estimés :

F B B B M M M M

La quatrième estimation, réalisée successivement pour chaque point, donne :

F M M M M M M M

Les flèches désignent les points dont le type estimé a changé et elles partent du point connexe qui appartient à un contour et qui justifie ce changement du type estimé.

Une variante de la quatrième estimation consiste à effectuer en outre un filtrage des points à faible gradient qui sont isolés, seuls ou par deux, dans une zone de points à fort gradient. Ce filtrage consiste à considérer comme point de contour un point estimé point de texture ou point à faible gradient, qui est précédé et suivi d'un point de contour ; de même pour un couple de points.

La cinquième estimation est réalisée sans retard par rapport à la quatrième estimation. Elle considère le type précédemment estimé du

point homologue du point considéré sur la ligne précédente. S'il est du type point de contour, le type estimé du point considéré est alors un point de contour.

| | |
|---|---|
| M<br>X [B] X<br>X X | Le point considéré est estimé<br>être un point de contour (M) |

Cette cinquième estimation permet d'obtenir une estimation exacte pour certaines portions de zones très tourmentées. Ceci apparaîtra au cours de la description d'un exemple ci-après. En pratique cette cinquième estimation peut être supprimée au prix d'une légère augmentation du nombre de points faussement estimés points de texture.

La description ci-dessous explique pas à pas les estimations réalisées pour les points de l'exemple d'image de la figure 1, afin de montrer les interactions entre les estimations successives.

La figure 4 représente les types estimés des points de la première ligne de l'exemple d'image de la figure 1, après la réalisation de la première estimation. La deuxième estimation est ensuite réalisée pour la première ligne, alors que simultanément la première estimation est réalisée pour les points de la deuxième ligne. Les types estimés sont représentés sur la figure 5, ceux de la première ligne sont inchangés car les points de la première ligne sont à faible gradient ce qui est un type certain. Le traitement étant réalisé en temps réel, chaque estimation pour tous les points d'une ligne dure un temps égal à la durée de l'analyse d'une ligne. Les types estimés par la première estimation sont connus avec un retard équivalent à sept points par rapport à une détection d'un fort gradient de luminance, car la détermination du nombre C, des points à fort gradient connexes qui suivent le point considéré, nécessite de connaître la luminance des sept points suivant le point considéré.

Puis la troisième estimation est réalisée pour la première ligne pendant que la deuxième estimation est réalisée pour la deuxième ligne et que la première estimation est réalisée pour la troisième ligne.

La figure 6 représente les types estimés par la première estimation pour les points de la troisième ligne, la deuxième estimation pour les points de la deuxième ligne, et la troisième estimation pour les points de la première ligne. Les types estimés des points de la première ligne sont

inchangés. Le type des points situés sur la deuxième ligne, à la neuvième, dixième, treizième, et quatorzième colonne, sont modifiés car ils sont voisins d'un point de contour sur la ligne suivante. Des flèches désignent les points dont le type estimé a changé, et partent du point de contour justifiant ce changement. Les types des points situés sur la deuxième ligne à la quinzième et à la seizième colonne ont changé parce que les points qui précèdent chacun d'eux sont successivement estimés être des points de contour.

Ensuite une quatrième estimation est réalisée pour les points de la première ligne, une troisième estimation pour les points de la deuxième ligne, une deuxième estimation pour les points de la troisième ligne, et une première estimation pour les points de la quatrième ligne, simultanément. La figure 7 représente les types ainsi estimés. A la suite de la deuxième estimation le type du point situé sur la troisième ligne, deuxième colonne, est modifié. Puis, à la suite de la troisième estimation, le type du point situé sur la deuxième ligne, troisième colonne est modifié aussi. Cet exemple montre comment le type point de contour peut être propagé vers le haut de l'image. A la deuxième ligne aussi, huitième colonne, le type d'un autre point est modifié à la suite de la troisième estimation, parce qu'il est suivi d'un point estimé point de contour par la deuxième estimation. Cet exemple montre comment le type point de contour peut être propagé de droite à gauche.

Ensuite la cinquième estimation est réalisée pour les points de la première ligne, la quatrième estimation est réalisée pour les points de la deuxième ligne, le troisième estimation est réalisée pour la troisième ligne, la deuxième estimation est réalisée pour la quatrième ligne, et la première estimation est réalisée pour la cinquième ligne, simultanément. Les types estimés sont représentés sur la figure 8. Lors de la deuxième estimation le type du point situé sur la deuxième ligne, à la septième colonne, est modifié car il est suivi d'un point de contour.

Ensuite la cinquième estimation est réalisée pour les points de la deuxième ligne, la quatrième estimation est réalisée pour les points de la troisième ligne, la troisième estimation est réalisée pour les points de la quatrième ligne, la deuxième estimation est réalisée pour les points de la cinquième ligne, et la première estimation est réalisée pour les points de

la sixième ligne, simultanément. Les types estimés sont représentés sur la figure 9. Le type du point situé sur la cinquième ligne, deuxième colonne, est modifié à la suite de la deuxième estimation.

Ensuite la cinquième estimation est réalisée pour les points de la troisième ligne, la quatrième estimation est réalisée pour les points de la quatrième ligne, la troisième estimation est réalisée pour les points de la cinquième ligne, la deuxième estimation est réalisée pour les points de la sixième ligne, et la première estimation est réalisée pour le point de la septième ligne, simultanément. Le type estimé du point situé à la troisième ligne, septième colonne, change à la suite de la troisième estimation car le point homologue sur la ligne précédente est un point de contour.

Ensuite la cinquième estimation est réalisée pour les points de la quatrième ligne, la quatrième estimation est réalisée pour les points de la cinquième ligne, la troisième estimation est réalisée pour les points de la sixième ligne, et la deuxième estimation est réalisée pour les points de la septième ligne, simultanément. Le type estimé du point situé sur la quatrième ligne, septième colonne, change car le point homologue sur la ligne précédente est un point de contour.

Quand la cinquième estimation est réalisée pour le point de la deuxième colonne, sixième ligne, son type estimé change car son point homologue sur la ligne précédente est un point de contour.

A la fin du traitement de cet exemple d'image, les types estimés sont ceux représentés sur la figure 10. Les flèches désignent les types qui ont changé par rapport à ceux de la figure 9. Cet exemple montre comment la cinquième estimation permet de propager le type point de contour à l'intérieur de portions de zone aux formes complexes. Tous les points de la zone contenant de nombreux points à fort gradient ont été ainsi estimés être des points de contour, et ceux appartenant à de petites zones (moins de sept points) ont été estimés être des points de texture.

Chaque type estimé pouvant prendre trois valeurs, il est codé par 2 bits, alors que chaque minorant $N_Z$ est codé par 4 bits, quand on limite à 15 sa valeur. Le fait de réaliser la deuxième, troisième, quatrième, et cinquième estimation du type d'un point en fonction du type des points voisins et non pas en fonction des valeurs $N_Z$ de leur minorant permet de

réaliser des dispositifs où la capacité des mémoires est réduite à deux bits pour chaque point.

Il apparaît sur l'exemple précédent que la réalisation de la première, deuxième, troisième et cinquième estimation permet de détecter une zone de points de contour ayant une forme allongée s'étirant verticalement sur quatre lignes, car ces estimations prennent chacune en compte le type des points sur une ligne voisine. Dans les cas où les textures engendrent des zones où les points à fort gradient sont souvent plus nombreux que 6, la valeur de seuil, $N_{S2}$ , et le nombre d'estimations doivent être augmentés. Il convient alors de rajouter des estimations du type de la deuxième et de la troisième estimation décrites ci-dessus.

L'estimation du type d'un point selon trois valeurs : fixe, ou de contour ou de texture, constitue une première variante du procédé selon l'invention.

Dans une deuxième variante du procédé selon l'invention le type estimé d'un point peut avoir quatre valeurs, représentées par "F", "$B_1$", "$B_2$" et "M", qui sont respectivement un point à faible gradient, un point très probablement de texture, un point peu probablement de texture et un point de contour.

Un point à fort gradient est estimé être très probablement un point de texture lorsque : $N_z \leqslant N_{S1}$ .

Un point est estimé être peu probablement un point de texture lorsque : $N_{S1} < N_z \leqslant N_{S2}$

Un point est estimé être un point de contour lorsque : $N_z > N_{S2}$ .

$N_{S1}$ et $N_{S2}$ sont deux valeurs entières telles que $N_{S2} > N_{S1}$ , $N_{S1} = 3$ et $N_{S2} = 6$ par exemple. La discrimination entre les points peu probablement points de texture et les points très probablement points de texture, permet de réaliser ensuite deux traitements différents sur les valeurs de luminance de ces points. Si, par exemple, la discrimination entre les points de contour et les points de texture est suivie d'un traitement d'élimination des points de texture, le traitement appliqué aux points dont le type estimé est $B_1$, est très énergique, et par contre le traitement appliqué aux points dont le type estimé est $B_2$, est moins énergique, de façon à minimiser les erreurs dues aux estimations fausses, un type estimé point de texture n'étant jamais totalement certain.

Pour cette variante les règles de détermination de $N_z$ sont inchangées. Les règles énoncées précédemment pour la deuxième estimation sont appliquées de la même façon, que le type B soit un type $B_1$ ou un type $B_2$ , mais des cas supplémentaires peuvent être rencontrés :

X $B_1$ $B_2$
X X

ou $B_2$ $B_1$ X
X X

ou X $B_1$ X
$B_2$ X

ou X $B_1$ $B_1$
X $B_2$

Dans ces quatre cas le point considéré est peu probablement un point de texture ($B_2$).

Dans les cas autres que ceux-ci et ceux décrits pour la première variante, le type estimé reste identique à celui estimé par la première estimation, c'est-à-dire un point très probablement de texture, $B_1$ .

Les règles pour réaliser la troisième estimation sont identiques à celles pour réaliser la deuxième estimation.

La règle pour réaliser la quatrième estimation est constituée par celle décrite pour la première variante, plus la règle concernant le cas suivant : le point considéré est estimé être un point peu probablement de texture, $B_2$ , s'il y a, parmi N' points suivant immédiatement le point considéré sur la même ligne, au moins un point à fort gradient et connexe au point considéré et s'il y a parmi ces points connexes au moins un point qui a été précédemment estimé être un point peu probablement de texture, $B_2$ , et s'il n'y a pas parmi ces points connexes à fort gradient, de point du type point de contour, M.

Exemples :

F $B_1$ $B_1$ $B_1$ $B_2$ $B_1$ $B_1$ $B_1$ $B_1$ $\Longrightarrow$ le point considéré est peu probablement un point de texture ($B_2$)

F [$B_1$] $B_1$ $B_1$ M $B_1$ $B_1$ $B_1$
F [$B_2$] $B_1$ $B_2$ M $B_1$ $B_1$ $B_1$ ⟹ le point considéré est un point de contour (M), comme dans la première variante

La règle pour réaliser la cinquième estimation est la même que celle décrite pour la première variante plus le cas suivant : Le point considéré est estimé être peu probablement un point de texture, $B_2$, si le point homologue sur la ligne précédente est estimé être peu probablement un point de texture. Exemples :

M
X [$B_1$] X
X

M
X [$B_2$] X
X
⟹ le point considéré est un point de contour (M)

$B_2$
X [$B_1$] X
X
⟹ le point considéré est estimé être peu probablement un point de texture ($B_2$)

Les figures 11 à 17 représentent les types estimés par les estimations successives pour l'exemple d'image de la figure 1 selon la deuxième variante du procédé selon l'invention. Les valeurs $N_z$ des minorants, représentées sur la figure 3, sont inchangées pour cette deuxième variante.

La figure 11 représente les types estimés par la première estimation pour les points de la première ligne.

La figure 12 représente les types estimés par la première estimation pour les points de la deuxième ligne et par la deuxième estimation pour les points de la première ligne ; les points de type $B_1$ correspondent aux valeurs $3 < N_z \leqslant 6$ et les points de type $B_2$ correspondent aux valeurs $N_z > 6$.

La figure 13 représente les types estimés par la première estimation pour la troisième ligne, les types estimés par la deuxième estimation pour la deuxième ligne et les types estimés par la troisième estimation pour la première ligne. Jusque là il n'y a pas de différence notable par rapport à la première variante.

La figure 14 représente les types estimés par la première estimation pour la quatrième ligne, les types estimés par la deuxième estimation pour la troisième ligne, les types estimés par la troisième estimation pour la deuxième ligne et les types estimés par la quatrième estimation pour la première ligne. Il est à remarquer que, dans la vingtième colonne, sur la troisième ligne, un type estimé $B_1$ est remplacé par un type estimé $B_2$ car le point homologue du point considéré sur la ligne suivante a un type estimé $B_2$. Puis le même changement est effectué sur la deuxième ligne de la vingtième colonne. A la dix-neuvième colonne de la deuxième ligne un type $B_1$ est remplacé par un type $B_2$, car le point considéré est suivi d'un point à fort gradient qui est peu probablement, $B_1$, et a pour homologue sur la ligne suivante un point à fort gradient peu probablement dû au bruit, $B_2$.

La figure 15 représente les types estimés par la première estimation pour les points de la cinquième ligne, les types estimés par la deuxième estimation pour les points de la quatrième ligne, les types estimés par la troisième estimation pour les points de la troisième ligne, les types pour la quatrième estimation pour les points de la deuxième ligne, et les types estimés par la cinquième estimation pour les points de la première ligne ; il est à remarquer sur la quatrième ligne, dix-neuvième colonne, qu'un type $B_1$ est remplacé par un type $B_2$ car le point considéré est suivi d'un point dont le type estimé est $B_2$.

La figure 16 représente les types estimés par la première estimation pour les points de la sixième ligne, les types estimés par la deuxième estimation pour les points de la cinquième ligne, les types estimés par la troisième estimation pour les points de la quatrième ligne, les types estimés par la quatrième estimation pour les points de la troisième ligne, et les types estimés par la cinquième estimation pour les points de la deuxième ligne. Il est à remarquer sur la quatrième ligne, dix-huitième colonne, qu'un type $B_1$ est remplacé par un type $B_2$ parce que le point considéré est suivi d'un point dont le type est $B_2$.

La figure 17 représente les types estimés à la fin du traitement de toute l'image représentée à la figure 1. La détermination d'une cinquième estimation pour les points de la troisième ligne, puis pour les points de la quatrième ligne, puis pour les points de la sixième ligne provoque le

remplacement d'un type $B_2$ par un type M dans la septième colonne à la troisième et à la quatrième ligne, et dans la deuxième colonne à la sixième ligne. Ces changements du type sont désignés par des flèches. Comme pour la première variante du procédé selon l'invention il y a mise en évidence d'une zone de points de contour et de deux zones de points de texture, mais l'une de ces dernières est estimée être très probablement une zone de texture car elle n'a que trois points, alors que l'autre est estimée être peu probablement une zone de texture car son nombre de points, cinq, est proche de la valeur de seuil fixée à six.

La figure 18 représente le schéma synoptique d'un exemple de réalisation d'un dispositif détecteur de contour pour la mise en oeuvre de la première variante du procédé selon l'invention. Ce dispositif comporte une borne d'entrée 1 recevant une valeur numérique de luminance pour chaque point d'une image en cours d'analyse, des moyens 2 de détection des points à fort gradient, des moyens 3 de calcul d'un minorant du nombre de points d'une zone de points à fort gradient connexes, des moyens 4 de détermination d'une première estimation du type d'un point, des moyens 5 de détermination d'une deuxième estimation, des moyens 6 de détermination d'une troisième estimation, des moyens 7 de détermination d'une quatrième estimation, des moyens 8 de détermination d'une cinquième estimation, et une borne de sortie 9 fournissant un mot binaire de deux bits indiquant pour chaque point d'image son type, c'est-à-dire point à faible gradient, point de contour, ou point de texture. La borne d'entrée 1 est reliée à une entrée des moyens 2 de détection des points à fort gradient, et une sortie de celui-ci est reliée à une entrée des moyens 3. Les moyens 3 comportent des moyens 11 de détermination du nombre de points connexes à un point donné et le suivant sur une même ligne, des moyens 12 de calcul d'un premier minorant du nombre de points de la zone de points à fort gradient à laquelle appartient le point considéré, un dispositif 14 à retard d'une ligne, un registre 13, et des moyens 15 de sélection d'un minorant du nombre de points de la zone à laquelle appartient le point considéré. L'entrée des moyens 3 est constituée par l'entrée des moyens 11, ceux-ci ont une sortie reliée à une première entrée des moyens 12 de calcul d'un premier minorant. Une deuxième et une troisième entrée des moyens 12 sont reliées respectivement à une

sortie du dispositif 14 à retard d'une ligne et à une sortie du registre 13. Une sortie des moyens 12 est reliée à une entrée du dispositif 14 à retard d'une ligne, à une première entrée des moyens 15 de sélection d'un minorant, et à une entrée de données du registre 13. Le registre 13 stocke un mot de deux bits et possède une entrée de commande recevant un signal d'horloge H dont la période est égale à la durée d'analyse d'un point d'image. Le dispositif 14 est constitué par un registre à décalage, il stocke des mots de deux bits et son nombre d'étage correspond à une ligne d'image ; il possède une entrée de commande recevant le signal d'horloge H. Une deuxième entrée et une sortie des moyens 15 sont reliées respectivement à la sortie du dispositif 14 à retard d'une ligne et à la sortie des moyens 3 de calcul d'un minorant. Cette sortie est reliée à une entrée des moyens 4 de détermination d'une première estimation, et une sortie des moyens 4 est reliée à une entrée des moyens 5 de détermination d'une deuxième estimation.

Les moyens 5 comportent un dispositif 16 à retard d'une ligne, trois registres 17, 18, et 19, et une mémoire morte 20. Une entrée du dispositif 16 à retard d'une ligne constitue l'entrée des moyens 5. La mémoire morte 20 comporte cinq entrées d'adresse recevant chacune deux bits, et une sortie de données ayant deux bits, cette sortie constituant une sortie des moyens 5. Une première, une deuxième, une troisième, une quatrième, et une cinquième entrée d'adresse de la mémoire morte 20 sont reliées respectivement à une sortie du registre 17, à l'entrée des moyens 5, à une sortie du registre 18, à une sortie du dispositif 16 à retard d'une ligne, et à une sortie du registre 19. Une entrée du registre 17 est reliée à l'entrée des moyens 5, une entrée du registre 18 est reliée à la sortie du dispositif 16 à retard d'une ligne, et une entrée du registre 19 est reliée à la sortie de la mémoire morte 20. Chacun des registres 17, 18, 19, a une capacité de deux bits en parallèle et possède une entrée de commande recevant le signal d'horloge H.

Les moyens 6 de détermination d'une troisième estimation comportent une entrée reliée à la sortie des moyens 5 et une sortie reliée à une entrée des moyens 7 de détermination d'une quatrième estimation. Les moyens 6 comportent des éléments identiques à ceux des moyens 5, leur référence numérique est différenciée par le signe prime.

Les moyens 7 de détermination d'une quatrième estimation comportent un registre à décalage 21 à huit étages, chaque étage stockant deux bits, et une mémoire morte 22. Une entrée série du registre 21 constitue l'entrée des moyens 7, et une sortie de la mémoire morte 22 constitue leur sortie. La mémoire morte 22 comporte huit entrées d'adresse recevant chacune deux bits, reliées respectivement à huit sorties du registre à décalage 21. Le registre à décalage 21 possède une entrée de commande recevant le signal d'horloge H.

Les moyens 8 de détermination d'une cinquième estimation comportent un dispositif 23 à retard d'une ligne et un circuit logique 24. Une entrée des moyens 8 est reliée d'une part à la sortie des moyens 7 et d'autre part à une entrée série du dispositif 23 et à une première entrée du circuit logique 24. Le dispositif 23 est constitué par un registre à décalage, il possède une entrée de commande recevant le signal d'horloge H et une sortie reliée à une seconde entrée du circuit logique 24. Une sortie du circuit logique 24 constitue la sortie des moyens 8 et est reliée à la borne de sortie 9 du dispositif selon l'invention.

A l'instant considéré la borne d'entrée 1 reçoit une valeur de luminance d'un point. Cette valeur est comparée par rapport à la valeur de la luminance des points voisins sur la même ligne et sur la ligne suivante, par les moyens 2 de détection des points à fort gradient. Si la différence entre valeur de luminance considérée et celle d'un des points voisins est supérieure à une valeur de seuil fixée, les moyens 2 fournissent un signal logique à l'entrée des moyens 11 qui déterminent alors le nombre de points à fort gradient connexes au point considéré et appartenant à la même ligne. Les moyens 11 fournissent, avec un retard correspondant à un point, un mot binaire de quatre bits constitué d'une valeur C, à la première entrée des moyens 12 de calcul d'un premier minorant. Il est à noter qu'à un instant donné le point traité par les moyens 3, le point traité par les moyens 4, etc..., sont des points différents de celui pour lequel un type estimé est fourni sur la borne de sortie 9 à cause des retards introduits par les divers moyens de calcul. Les moyens de calcul 12 déterminent une valeur $N_C$, constituant un premier minorant du nombre de points de la zone de points à fort gradient à laquelle appartient le point considéré. Cette valeur est déterminée à partir de la valeur $N_P$ du

minorant déterminé pour le point précédent, et de la valeur $N_a$ du minorant calculé pour le point homologue sur la ligne précédente. La valeur $N_c$ est stockée dans le dispositif 14 à retard d'une ligne. A l'instant considéré le dispositif 14 restitue une valeur notée $N_{c_{ret}}$ qui constitue la valeur $N_a$. A l'instant considéré la sortie du registre 13 fournit la valeur $N_p$ à la troisième entrée des moyens 12 , la valeur $N_p$ ayant été stockée pendant une durée correspondant à un point. Le fonctionnement détaillé des moyens de calcul 12, des moyens 11 de détermination du nombre de points à fort gradient connexes, et des moyens 2 de détection des points à fort gradient, est exposé dans la suite de la description.

Il faut bien distinguer le point considéré pour le calcul d'un premier minorant et le point considéré pour la sélection d'un minorant. A un instant donné ce n'est pas le même point car le dispositif 14 introduit un retard équivalent à une ligne. La valeur $N_c$ calculée à l'instant considéré par les moyens 12 constitue, à l'instant considéré, la valeur $N_b$ du premier minorant correspondant au point homologue, sur la ligne suivante, du point considéré pour la sélection. La valeur $N_{c_{ret}}$ fournie par la sortie du dispositif 14 constitue la valeur du premier minorant correspondant au point considéré,pour la sélection. Les moyens 15 de sélection reçoivent les valeurs $N_b$ et $N_{c_{ret}}$ respectivement sur leur première et deuxième entrée et fournissent sur leur sortie une valeur $N_z$ codée par un mot binaire de quatre bits qui est appliqué à l'entrée des moyens 4 de détermination d'une première estimation.

Les moyens 4 déterminent si la valeur $N_z$ est supérieure à zéro, d'une part, et si elle est supérieure à la valeur seuil $N_{S2} = 6$, d'autre part. Les moyens 4 fournissent une valeur $E^1$ du type estimé d'un point, ce type est codé par un mot binaire de deux bits. La valeur $E^1$ est fournie à l'entrée des moyens 5 où elle est stockée dans le registre 17 et dans le dispositif 16 sous l'action du signal d'horloge H.

A l'instant considéré le point considéré pour la deuxième estimation est un point éloigné d'une ligne plus un point par rapport au point considéré pour la première estimation. Le type estimé précédemment par la première estimation pour ce point a pour valeur $E_c^1$ qui est fournie par la sortie du registre 18. Le type estimé précédemment par la première

estimation pour le point suivant le point considéré a pour valeur $E_s^1$ qui est fournie par la sortie du dispositif 16 à retard d'une ligne. Le type estimé précédemment par la première estimation pour le point homologue du point considéré sur la ligne suivante a pour valeur $E_b^1$ qui est fournie par le registre 17. Le type estimé par la première estimation pour le point suivant ce point homologue a pour valeur $E_{bs}^1$ qui est fournie par la sortie des moyens 4, et qui est donc égale à la valeur estimée $E^1$ du type du point considéré, à l'instant considéré, pour la première estimation. D'autre part la sortie du registre 19 fournit une valeur $E_p^2$ qui est le type estimé précédemment par la deuxième estimation pour le point précédant le point considéré, cette valeur ayant été déterminée immédiatement précédemment et ayant été stockée par le registre 19 pendant une durée correspondant à un point. L'ensemble des valeurs $E_b^1$, $E_{bs}^1$, $E_c^1$, $E_s^1$, et $E_p^2$ constitue une adresse de dix bits pour la mémoire morte 20, celle-ci fournit sur sa sortie une valeur $E^2$ constituée de deux bits selon la table de vérité ci-dessous où les types sont représentés non pas sous forme binaire mais avec les symboles F, M, et B, définis précédemment, avec le symbole X pour un type quelconque, et un symbole Y pour un type quelconque sauf ce type point de contour.

| $E_b^1$ | $E_{bs}^1$ | $E_c^1$ | $E_s^1$ | $E_p^2$ | $E^2$ |
|---|---|---|---|---|---|
| X | X | F | X | X | F |
| X | X | M | X | X | M |
| M | X | B | X | X | M |
| X | M | B | B | X | M |
| X | X | B | M | X | M |
| X | X | B | X | M | M |
| Y | Y | B | Y | Y | B |

Les moyens 6 de détermination d'une troisième estimation sont constitués comme les moyens 5 et fonctionnent de la même manière. Leur sortie fournit une valeur $E^3$ d'un type estimé à l'entrée des moyens 7 où cette valeur est stockée dans le registre à décalage 21. A l'instant considéré une première sortie du registre à décalage 21 fournit une valeur $E_1^3$ du type estimé précédemment par la troisième estimation pour le point qui est considéré pour réaliser la quatrième estimation ; une deuxième sortie fournit une valeur $E_2^3$ du type estimé correspondant au point suivant, une troisième sortie fournit une valeur $E_3^3$ du type estimé du point

suivant le point suivant, etc.. Les valeurs fournies par les huit sorties du registre à décalage 21 constituent une adresse de 16 bits pour la mémoire morte 22, et celle-ci fournit sur sa sortie un mot binaire de deux bits constituant une valeur $E^4$ du type estimé pour le point considéré par la quatrième estimation. Le fonctionnement de la mémoire morte 22 est représenté par la table de vérité ci-dessous.

| $E_1^3$ | $E_2^3$ | $E_3^3$ | $E_4^3$ | $E_5^3$ | $E_6^3$ | $E_7^3$ | $E_8^3$ | $E^4$ |
|---|---|---|---|---|---|---|---|---|
| F | X | X | X | X | X | X | X | F |
| M | X | X | X | X | X | X | X | M |
| B | M | X | X | X | X | X | X | M |
| B | B | M | X | X | X | X | X | M |
| B | B | B | M | X | X | X | X | M |
| B | B | B | B | M | X | X | X | M |
| B | B | B | B | B | M | X | X | M |
| B | B | B | B | B | B | M | X | M |
| B | B | B | B | B | B | B | M | M |
| B | F | X | X | X | X | X | X | B |
| B | Y | F | X | X | X | X | X | B |
| B | Y | Y | F | X | X | X | X | B |
| B | Y | Y | Y | F | X | X | X | B |
| B | Y | Y | Y | Y | F | X | X | B |
| B | Y | Y | Y | Y | Y | F | X | B |
| B | Y | Y | Y | Y | Y | Y | F | B |
| B | Y | Y | Y | Y | Y | Y | Y | B |

Dans une variante de réalisation réalisant en outre un filtrage des points isolés, seuls ou par deux, qui ne sont pas des points de contour mais sont situés dans une zone de points à fort gradient, le filtrage peut être réalisé par une programmation particulière de la mémoire morte 22, selon la table de vérité ci-dessous. Le point considéré pour la quatrième estimation ne correspond pas au type $E_1^3$, mais au type $E_2^3$, car le type $E_1^3$ du point précédent intervient dans la décision de filtrage. Par contre, le type des six points suivants est pris en compte.

| point précé-dant | point consi-déré | points suivants | | | | | | |
|---|---|---|---|---|---|---|---|---|
| $E_1^3$ | $E_2^3$ | $E_3^3$ | $E_4^3$ | $E_5^3$ | $E_6^3$ | $E_7^3$ | $E_8^3$ | $E^4$ |
| Y | F | X | X | X | X | X | X | F |
| Y | M | X | X | X | X | X | X | M |
| Y | B | M | X | X | X | X | X | M |
| Y | B | B | M | X | X | X | X | M |
| Y | B | B | B | M | X | X | X | M |

| | | | | | | | | |
|---|---|---|---|---|---|---|---|---|
| Y | B | B | B | B | M | X | X | M |
| Y | B | B | B | B | B | M | X | M |
| Y | B | B | B | B | B | B | M | M |
| Y | B | B | B | B | B | B | B | B |
| Y | B | F | X | X | X | X | X | B |
| Y | B | Y | F | X | X | X | X | B |
| Y | B | Y | Y | F | X | X | X | B |
| Y | B | Y | Y | Y | F | X | X | B |
| Y | B | Y | Y | Y | Y | F | X | B |
| Y | B | Y | Y | Y | Y | Y | F | B |
| M | **F** | M | X | X | X | X | X | M |
| M | **F** | Y | M | X | X | X | X | M |
| M | F | Y | Y | X | X | X | X | F |
| M | M | X | X | X | X | X | X | M |
| M | B | M | X | X | X | X | X | M |
| M | B | B | M | X | X | X | X | M |
| M | B | B | B | M | X | X | X | M |
| M | B | B | B | B | M | X | X | M |
| M | B | B | B | B | B | M | X | M |
| M | B | B | B | B | B | B | M | M |
| M | B | F | M | X | X | X | X | M |
| M | B | Y | F | X | X | X | X | B |
| M | B | Y | Y | F | X | X | X | B |
| M | B | Y | Y | Y | F | X | X | B |
| M | B | Y | Y | Y | Y | F | X | B |
| M | B | Y | Y | Y | Y | Y | F | B |
| M | B | Y | Y | Y | Y | Y | Y | B |

Les points encadrés sont ceux pour lesquels le filtrage est effectif ($16^{ième}$ et $17^{ième}$ lignes du tableau ci-dessus).

La valeur $E^4$ du type estimé par les moyens 7 est fournie d'une part à l'entrée du dispositif 23 à retard d'une ligne et d'autre part à la première entrée du circuit logique 24. $E^4$ constitue le type $E_c^4$ précédemment estimé du point considéré pour la cinquième estimation. La sortie du dispositif 23 fournit une valeur $E_a^4$ qui constitue le type, précédemment estimé par la quatrième estimation, pour le point homologue du point considéré sur la ligne précédente. Le circuit logique 24 reçoit donc deux mots binaires de deux bits et fournit à la sortie du dispositif selon l'invention un mot binaire de deux bits selon la table de véritié ci-dessous. Ce mot binaire constitue la valeur $E^5$ du type estimé du point considéré pour la cinquième estimation.

| $E_c^4$ | $E_a^4$ | $E^5$ |
|---|---|---|
| F | X | F |
| M | X | M |
| B | M | M |
| B | B | B |
| B | M | B |

La réalisation du circuit logique 24 est à la portée de l'homme de l'art. Elle peut être faite à l'aide d'un réseau de portes logiques car le nombre de variables d'entrée est seulement de quatre, ou bien elle peut être faite à l'aide d'une mémoire morte.

La figure 19 représente un schéma synoptique plus détaillé d'une partie du dispositif représenté sur la figure 18. Les moyens 2 de détection des points à fort gradient sont décrits plus loin. Les moyens 12 de calcul d'un premier minorant sont constitués de moyens de commande 51 et d'un dispositif de calcul 52.

Les moyens 11 de détermination du nombre de points à fort gradient connexes au point considéré sont constitués d'un registre à décalage 36 à huit étages et d'une mémoire morte 37. Une entrée série du registre à décalage 36 constitue l'entrée des moyens 11. Le registre à décalage 36 possède une entrée de commande recevant le signal d'horloge H et huit sorties parallèles qui sont reliées respectivement à huit entrées d'adresse de la mémoire morte 37. Celle-ci possède une sortie de données fournissant un mot binaire de quatre bits et constituant une première sortie des moyens 11 reliée à la première entrée des moyens 12 et représentée sur la figure 18. Les moyens 11 possèdent une seconde sortie constituée par une des sorties parallèles du registre à décalage 36 telle que les données qu'elle fournit sont retardées de huit périodes d'horloge par le registre 36. Cette seconde sortie n'est pas représentée sur la figure 18.

Le dispositif 52 comporte deux additionneurs pour mots de quatre bits, 38 et 39, deux dispositifs limiteurs 49 et 50, et un multiplexeur 40 à quatre entrées et une sortie pour mots de quatre bits. Une première entrée du dispositif de calcul 52 constitue la première entrée des moyens 12 et est reliée à une première entrée de l'additionneur 38 d'une part, et à une première entrée du multiplexeur 40 d'autre part. Une deuxième entrée des moyens de calcul 52 constitue la deuxième entrée des moyens 12 et est reliée respectivement à une deuxième entrée de l'additionneur 38 et à une première entrée de l'additionneur 39. Une troisième entrée du dispositif de calcul 52 constitue la troisième entrée des moyens 12 et est reliée d'une part à une deuxième entrée de l'additionneur 39 et à la quatrième entrée du multiplexeur 40. Les additionneurs 38 et 39 possèdent

chacun une première sortie fournissant un mot de quatre bits et une seconde sortie fournissant un bit de retenue, ces sorties sont reliées respectivement à une première et à une deuxième entrée du limiteur 49 et du limiteur 50 respectivement. Les limiteurs 49 et 50 ont chacun une sortie fournissant quatre bits respectivement à la deuxième et à la troisième entrée du multiplexeur 40. Le multiplexeur 40 possède une entrée de commande reliée à une quatrième entrée du dispositif de calcul 52 et possède une sortie constituant la sortie des moyens 12 et fournissant un mot de quatre bits.

Les moyens de commande 51 sont constitués d'un comparateur 42, d'un registre 44, et d'une mémoire morte 45. Une première et une seconde entrée des moyens de commande 51 reçoivent respectivement un bit et quatre bits fournis respectivement par la seconde sortie des moyens 11 et par la sortie du dispositif 14 à retard d'une ligne. Une sortie fournit un mot de deux bits à la quatrième entrée du dispositif de calcul 52. La mémoire morte 45 possède une première, une deuxième, et une troisième entrée d'adresse recevant chacune un bit, et possède une sortie constituant la sortie des moyens de commande 51. La première entrée des moyens de commande 51 est reliée à la deuxième entrée d'adresse de la mémoire morte 45 et à une entrée de données du registre 44. La deuxième entrée des moyens de commande 51 est reliée à une entrée du comparateur 42, et la sortie de celui-ci est reliée à la première entrée d'adresse de la mémoire morte 45. Une sortie de donnée du registre 44 est reliée à la troisième entrée d'adresse de la mémoire morte 45. Le registre 44 est un registre à un étage stockant un bit, et est commandé par une entrée recevant le signal d'horloge H.

Les moyens 15 de sélection d'un minorant sont constitués d'un multiplexeur 46 et d'un comparateur 49, le multiplexeur 46 étant commandé par un signal logique fourni par le comparateur 49. Outre une entrée de commande, le multiplexeur 46 possède une première entrée, une seconde entrée et une sortie qui constituent respectivement la première entrée, la seconde entrée et la sortie des moyens 15. Le multiplexeur 49 reçoit et transmet des mots de quatre bits. Une entrée du comparateur 49 est reliée à la première entrée des moyens 15, et une sortie est reliée à une entrée de commande du multiplexeur 46.

Les moyens 4 de détermination d'une première estimation du type d'un point sont constitués de deux comparateurs 47 et 48 ayant chacun une entrée, pour quatre bits, reliée à l'entrée des moyens 4, et ayant chacun une sortie fournissant un bit. Ces deux sorties sont réunies pour constituer la sortie des moyens 4 fournissant deux bits.

Pour chaque point de l'image analysée une valeur de luminance, sous forme numérique, est reçue sur la borne d'entrée 1.

Les moyens 2 de détection des points à fort gradient de luminance fournissent, avec un retard correspondant à une ligne, un signal logique si la différence entre cette valeur et la valeur de luminance des points voisins sur la même ligne et sur la ligne suivante, est supérieure à une valeur de seuil fixée.

La valeur du signal logique fournit par la sortie des moyens 2 est inscrite dans le registre à décalage 36 sous l'action du signal d'horloge H. Après huit périodes de l'horloge H la valeur de ce signal logique est fournie par la huitième sortie du registre 36 qui constitue la seconde sortie des moyens 11. Au même instant la première, ..., et la septième sortie du registre à décalage 36 fournissent alors des signaux logiques correspondant au type des sept points suivant le point considéré sur la même ligne. Ces huit valeurs binaires constituent une adresse pour la mémoire morte 37 qui fournit alors un mot binaire de quatre bits selon la table de vérité ci-dessous, où les symboles X représentent des valeurs indifférentes.

| Entrées | | | | | | | | Sorties | | | |
|---|---|---|---|---|---|---|---|---|---|---|---|
| 8ème | 7ème | 6ème | 5ème | 4ème | 3ème | 2ème | 1ère | $2^3$ | $2^2$ | $2^1$ | $2^0$ |
| 0 | X | X | X | X | X | X | X | 0 | 0 | 0 | 0 |
| 1 | 0 | X | X | X | X | X | X | 0 | 0 | 0 | 1 |
| 1 | 1 | 0 | X | X | X | X | X | 0 | 0 | 1 | 0 |
| 1 | 1 | 1 | 0 | X | X | X | X | 0 | 0 | 1 | 1 |
| 1 | 1 | 1 | 1 | 0 | X | X | X | 0 | 1 | 0 | 0 |
| 1 | 1 | 1 | 1 | 1 | 0 | X | X | 0 | 1 | 0 | 1 |
| 1 | 1 | 1 | 1 | 1 | 1 | 0 | X | 0 | 1 | 1 | 0 |
| 1 | 1 | 1 | 1 | 1 | 1 | 1 | 1 | 1 | 0 | 0 | 0 |

La valeur du mot binaire fourni est égale au nombre de points à fort gradient connexes au point considéré, parmi les sept points qui le suivent.

La valeur $N_c$ d'un premier minorant, pour le point considéré, est constituée :

- soit par la valeur C fournie par la sortie des moyens 11 de détermination du nombre de points à fort gradient connexes ;

- soit par la valeur $C + N_a$ fournie par la sortie de l'additionneur 38 avec une limitation à 15 par le limiteur 49 ;

- soit par la valeur $N_a + N_p$ fournie par la sortie de l'additionneur 39 avec une limitation à 15 par le limiteur 50 ;

- soit par la valeur $N_p$ fournie par la sortie du registre 13 ;

La sélection est effectuée par le multiplexeur 40 commandé par les moyens de commande 51. Le limiteur 49 est constitué, par exemple, de quatre portes logiques OU ayant une entrée commune reliée à la sortie de retenue de l'additionneur 38, ayant chacune une entrée recevant un des bits fournis par l'additionneur 38, et ayant chacune une sortie, les quatre sorties constituant la sortie du limiteur 49 et fournissant quatre bits. Ainsi quand la sortie de retenue de l'additionneur 38 fournit une valeur logique 1 les quatre sorties du limiteur 49 fournissent quatre valeurs logiques 1 qui forment un mot binaire de valeur décimale 15. Le limiteur 50 est constitué comme le limiteur 49.

Les signaux de commande du multiplexeur 40 sont fournis par la sortie de la mémoire morte 45 des moyens de commande 51. Ces signaux sont déterminés en fonction de la valeur du gradient de luminance du point considéré, du point précédant le point considéré sur la même ligne, du point homologue du point considéré sur la ligne précédente, et du point précédant ce point homologue. La huitième sortie du registre à décalage 36 fournit une valeur logique indiquant si au point considéré il y a un fort ou un faible gradient pour la détermination d'un premier minorant. Cette valeur logique est égale à 1 si ce point est à fort gradient. Cette valeur logique est stockée dans le registre 44 pendant une durée correspondant à un point, la sortie du registre 44 fournit donc la valeur logique traduisant le type du point précédant le point considéré. La sortie du dispositif 14 à retard d'une ligne fournit à l'entrée du comparateur 42 la valeur $N_a$ du

premier minorant déterminé pour le point homologue du point considéré sur la ligne précédente. Si la valeur $N_a$ est supérieure à 0 la sortie du comparateur 42 fournit un signal logique de valeur 1 à la première entrée d'adresse de la mémoire morte 45. La mémoire morte 45 fournit les signaux de commande du multiplexeur 40 selon la table de vérité ci-dessous.

Les symboles 1, 2, 3 et 4 correspondent à la mise en relation respectivement de la première, de la deuxième, de la troisième et de la quatrième entrée du multiplexeur 40 avec sa sortie.

| entrées de la mémoire 45 | | | | |
|---|---|---|---|---|
| 1ème | 2ème | 3ème | commande du multiplexeur 40 | valeur sélectionnée pour $N_c$ |
| X | 0 | X | 1 | C = 0 |
| 0 | 1 | 0 | 1 | C |
| 1 | 1 | 0 | 2 | $C + N_a$ |
| 1 | 1 | 1 | 3 | $N_a + N_p$ |
| 0 | 1 | 1 | 4 | $N_p$ |

La valeur $N_c$ fournie par la sortie des moyens 52 est stockée par le dispositif 14 à retard d'une ligne. A l'instant considéré, le dispositif 14 fournit une valeur $N_{c_{ret}}$ à la seconde entrée du multiplexeur 46. La valeur $N_c$ fournie au même instant par les moyens de calcul 52, constitue la valeur $N_b$ du premier minorant correspondant au point homologue sur la ligne suivante pour le point considéré dans l'opération de sélection d'un minorant. La valeur $N_b$ est comparée à la valeur 0 par la comparateur 49. Si elle est supérieure à zéro, c'est-à-dire si le point homologue sur la ligne suivante est à fort gradient, le comparateur 49 génère un signal logique tel que le multiplexeur 46 transmet la valeur $N_b$ qui constitue alors la valeur $N_z$ du minorant recherché. Dans le cas contraire le multiplexeur 46 transmet la valeur $N_{c_{ret}}$ fournie par le dispositif 14.

La valeur $N_z$ du minorant du nombre de points d'une zone de points à fort gradient est appliquée à l'entrée des moyens 4 de détermination d'une première estimation du type des points de cette zone. La valeur

$N_z$ est comparée à la valeur 0 par le comparateur 47 qui fournit un signal de valeur logique 1 si $N_z$ est supérieure à 0. La valeur $N_z$ est comparée par rapport à la valeur seuil $N_{S2}$ par le comparateur 48 qui fournit sur sa sortie un signal logique de valeur 1 si $N_z$ est supérieure à $N_{S2}$. Ces deux bits constituent le mot binaire de valeur $E^1$ qui est le type estimé du point correspondant à la valeur de minorant $N_z$ considérée.

Il est à la portée de l'homme de l'art d'adapter cet exemple de réalisation pour mettre en oeuvre la deuxième variante du procédé selon l'invention, dans laquelle un type estimé peut avoir quatre valeurs possibles.

La figure 20a représente le schéma synoptique d'un exemple de réalisation des moyens de détection des points à fort gradient. Ils comportent une entrée recevant, à un instant $t_n$ considéré, la valeur $X_n^{j+1}$ de la luminance du point (n, j+1) situé au-dessous du point courant, et une sortie fournissant la vleur $GC_n^j$, prenant la valeur 1 si le point courant (n,j) est un point à fort gradient et la valeur 0 dans le cas contraire. L'entrée est reliée à l'entrée série d'un registre à décalage 60, dont la sortie série est reliée à l'entrée série d'un registre à décalage 57, dont la sortie est reliée à une première entrée d'un comparateur 58. Une seconde entrée du comparateur 58 est reliée à l'entrée série du registre 57. Un comparateur 61 possède une première entrée reliée à l'entrée des moyens 2 et une seconde entrée reliée à la sortie du registre à décalage 60. Les sorties des comparateurs 61 et 58 sont reliées resspectivement aux entrées série d'un registre à décalage 62 et d'un registre à décalage 59. Une porte OU 63 a quatre entrées reliées respectivement à la sortie du comparateur 61, à la sortie du comparateur 58, à la sortie du registre à décalage 62 et à la sortie du registre à décalage 59, et sa sortie constitue la sortie des moyens 2. Les registres à décalage 60 et 62 ont chacun une capacité équivalente à une ligne d'image et les registres 57 et 59 ont chacun une capacité équivalente à un point d'image, et chacun de ces registres possède une entrée d'horloge recevant le signal d'horloge H.

La figure 20b illustre le fonctionnement de cet exemple de réalisation. Dans la colonne de gauche sont représentées les diverses positions d'un contour par rapport au point courant, et dans la colonne de droite sont représentés les points à fort gradients tels qu'ils sont détectés

par les moyens 2. La séparation entre deux points où il y a un fort gradient est représentée en trait gras. Un carré en traits continus représente le premier point détecté à fort gradient et un carré en traits discontinus représente un deuxième ou un troisième point à fort gradient déduit du premier, car le long d'un contour les moyens 2 détectent des couples de points à fort gradient situés de part et d'autre du contour. Dans le cas particulier représenté à la 6ième ligne de la figure 20b les moyens 2 ne détectent aucun point à fort gradient, mais au cours du traitement des points précédant le point courant, le point au-dessus et le point à gauche ont été déjà détectés et par conséquent il y bien détection de points situés de part et d'autre du contour. Il en est de même pour le point au-dessus dans le cas représenté à la quatrième ligne.

La détection d'un point à fort gradient est réalisée en comparant la valeur de la luminance de ce point par rapport à celle du point voisin à droite et celle du point voisin en-dessous, c'est pourquoi la valeur de luminance $X_n^{j+1}$ fournie à l'entrée des moyens 2 est celle correspondant au point situé en-dessous du point courant. Cette valeur est retardée d'un temps équivalent à une ligne par le registre à décalage 60 puis d'un temps équivalent à un point par le registre à décalage 57, les sorties de ces registres fournissent donc respectivement, à l'instant $t_n$, les valeurs $X_n^j$ et $X_{n+1}^j$. Le comparateur 58 compare les valeurs $X_n^j$ et $X_{n+1}^j$ de la luminance du point courant et de celle du point voisin à droite. Le comparateur 81 compare les valeurs $X_n^j$ et $X_n^{j+1}$ de la luminance du point courant et de celle du point voisin en-dessous. Les comparateurs 58 et 61 possèdent une marge, de valeur $\pm 25$ par exemple si la luminance peut prendre les valeurs 0 à 255. Un fort gradient est alors détecté pour un écart de luminance supérieur à 25 unités. Les signaux fournis par les comparateurs 58 et 61 sont transmis d'une part par la porte OU 63 à la sortie des moyens 2 et, d'autre part, sont retardés respectivement d'un temps équivalent à un point et d'un temps équivalent à une ligne par les registres à décalage 59 et 62. Ainsi lorsqu'un point à fort gradient est détecté à gauche d'un contour vertical non seulement les moyens 2 indiquent cette détection, mais ils indiquent aussi que le point suivant est un point à fort gradient, et lorsqu'un point à fort gradient est détecté au-dessus d'un contour le point voisin sur la ligne suivante est détecté aussi comme point à fort gradient.

L'invention n'est pas limitée au mode de réalisation décrit et représenté. Il est à la portée de l'homme de l'art de réaliser de nombreuses variantes de ces modes de réalisation, notamment en modifiant le nombre d'estimations réalisées. Il est aussi à la portée de l'homme de l'art de réaliser différemment le moyen de détection des points à fort gradient de luminance. Il est possible, notamment, de simplifier cette détection en considérant comme point à fort gradient tout point ayant une forte différence de luminance par rapport au point le précédant, ou par rapport au point homologue sur la ligne précédente, sans considérer comme point à fort gradient le point en vis-à-vis. Les contours détectés sont alors composés d'un chapelet de points, large d'un seul point, et moins lisse. Lorsque le contour est fermé, sur un côté les points détectés sont à l'intérieur du contour, et sur le côté opposé ils sont à l'extérieur du contour, ce qui provoque donc une erreur de un point sur la position estimée du contour. Dans certaines applications de la détection des contours, cette erreur peut être négligée.

## REVENDICATIONS

1. Procédé de discrimination des contours et des textures dans une image vidéo, caractérisé en ce qu'il consiste : à détecter les points d'une image, dits points à fort gradient, dont le gradient de luminance a une valeur supérieure à une valeur fixée ; et en ce qu'il consiste, pour chaque point à fort gradient, à déterminer un minorant $N_z$ du nombre de points d'une zone constituée de points à fort gradient connexes, où est situé le point considéré, à faire au moins p estimations du type du point considéré :

- une première estimation effectuée en comparant la valeur $N_z$ à une valeur $N_{S2}$ fixée ($N_{S2}$ entier positif), le point étant estimé être un point de contour (M), si $N_z > N_{S2}$ et un point de texture (B) si $N_z \leqslant N_{S2}$ ;

- p-2 estimations successives, chacune étant réalisée en fonction du type, estimé précédemment, des points à fort gradient connexes au point considéré et appartenant à la même ligne ou à la ligne suivante, p étant un nombre entier inférieur ou égal à $N_{S2}$ ;

- une $p^{ième}$ estimation en fonction du type estimé précédemment, de N' points suivant immédiatement le point considéré sur la même ligne, N' étant un nombre entier fixé tel que $N' \geqslant N_{S2} - p$ ; le point considéré étant estimé être un point de contour s'il a précédemment été estimé être un point de contour (M) ou s'il y a parmi ces N' points au moins un point à fort gradient connexe au point considéré, et s'il y a parmi ces points à fort gradient connexes au point considéré au moins un point de contour (M) ; et le point considéré étant estimé être un point de texture (B) dans les autres cas; et à discriminer les points de contour (M) et les points de texture (B) d'après le résultat de la dernière estimation réalisée.

2. Procédé selon la revendication 1, caractérisé en ce qu'il consiste en outre, pour chaque point à fort gradient, à faire une $(p+1)^{ième}$ estimation de son type en fonction du type précédemment estimé du point homologue du point considéré sur la ligne précédente ; le point considéré étant estimé être un point de contour (M) s'il a été précédemment estimé être un point de contour (M), ou si son point homologue sur la ligne

précédente est un point de contour (M) ; et le point considéré étant estimé être un point de texture (B) dans les autres cas.

3. Procédé selon la revendication 1, caractérisé en ce que le nombre p est égal à 4 et en ce que le nombre $N_{S2}$ est réglable en fonction des textures constituant l'image.

4. Procédé selon la revendication 1, caractérisé en ce que la détermination d'un minorant $N_z$ du nombre de points à fort gradient contenus dans la zone où est situé le point considéré, consiste à :

— déterminer un premier minorant $N_c$ de ce nombre de points, $N_c$ étant pris égal :

soit à C , un minorant du nombre de points à fort gradient connexes au point considéré et le suivant sur la même ligne, si le point précédant le point considéré sur la même ligne, et le point homologue du point considéré sur la ligne précédente, ne sont pas à fort gradient ;

soit à $N_p$ , un premier minorant calculé précédemment pour le point précédant le point considéré sur la même ligne, si le point précédant le point considéré sur la même ligne est à fort gradient et le point homologue sur la ligne précédente n'est pas à fort gradient, ou si le point précédant le point considéré, le point homologue sur la ligne précédente, et le point précédant ce dernier sont à fort gradient ;

soit à $N_a$+C , $N_a$ étant un premier minorant calculé précédemment pour le point homologue du point considéré sur la ligne précédente, si ce point homologue est à fort gradient et le point précédant le point considéré sur la même ligne n'est pas à fort gradient,

soit à $N_a$+$N_p$ , si le point homologue du point considéré sur la ligne précédente et le point précédant le point considéré sur la même ligne sont à fort gradient et le point précédant le point homologue sur la ligne précédente n'est pas à fort gradient ;

— à prendre pour minorant $N_z$ :

- soit le premier minorant $N_c$ , si le point homologue du point considéré sur la ligne suivante n'est pas à fort gradient ;

- soit $N_b$ , un premier minorant calculé précédemment pour le point homologue du point considéré sur la ligne suivante, si ce point homologue est à fort gradient.

5. Procédé selon la revendication 1, caractérisé en ce que, lors de la $j^{ème}$ estimation du type d'un point à fort gradient ($2 \leqslant j \leqslant p - 1$), ce point est estimé :

— être un point de contour (M) si, d'après la $(j-1)^{ième}$ estimation, il est un point de contour (M) ou si, d'après une précédente estimation :

- le point précédent sur la même ligne,

- ou le point suivant sur la même ligne,

- ou le point homologue sur la ligne suivante est un point de contour (M),

- ou le point suivant le point homologue sur la ligne suivante est un contour (M) et le point suivant le point considéré est un point de texture (B) ;

— et est estimé être un point de texture (B) dans tous les autres cas.

6. Procédé selon la revendication 1, caractérisé en ce que la première estimation consiste en outre à comparer la valeur $N_z$ par rapport à une valeur $N_{S1}$ fixée ($N_{S1}$ entier positif inférieur à $N_{S2}$) le point considéré étant estimé être :

- très probablement un point de texture ($B_1$) si $N_z \leqslant N_{S1}$

- peu probablement un point de texture ($B_2$) si $N_{S1} < N_z \leqslant N_{S2}$.

7. Procédé selon la revendication 6, caractérisé en ce que, lors de la $j^{ème}$ estimation du type d'un point à fort gradient ($2 \leqslant j < p-1$), ce point est estimé être :

— soit un point de contour (M) si d'après $(j-1)^{ième}$ estimation il est un point de contour (M) ou si, d'après une estimation précédente :

- le point précédent sur la même ligne,

- ou le point suivant sur la même ligne,

- ou le point homologue sur la ligne suivante est un point de contour (M),

- ou le point suivant le point homologue sur la ligne suivante est un point de contour (M) et le point suivant le point considéré sur la même ligne est un point très probablement ou peu probablement de texture ($B_1$ ou $B_2$) ;

— soit être peu probablement un point de texture ($B_2$) si, d'après la $(j-1)^{ième}$ estimation il est peu probablement un point de texture ($B_2$) ou si, d'après un estimation précédente,

- le point précédent sur la même ligne,

- ou le point suivant sur la même ligne,

- ou le point homologue sur la ligne suivante est peu probablement un point de texture ($B_2$),

- ou si le point suivant le point homologue sur la ligne suivante est peu probablement un point de texture ($B_2$) et le point suivant le point considéré est très probablement un point de texture ($B_1$) ;

-- soit être très probablement un point de texture ($B_1$) dans les autres cas ;

et en ce que, lors de la $p^{ième}$ estimation, le type d'un point de texture (B) est estimé être peu probablement un point de texture ($B_2$) s'il y a parmi les N' points suivant le point considéré au moins un point à fort gradient connexe au point considéré, et il n'y a pas de points de contour (M) parmi ces points connexes, et il y a au moins un point à fort gradient peu probablement dû au bruit ($B_2$) parmi ces points connexes ; et est estimé être très probablement un point de texture ($B_1$) dans les autres cas.

8. Procédé selon les revendications 2 et 7, caractérisé en ce que, lors de la $(p+1)^{ième}$ estimation, un point précédemment estimé être très probablement un point de texture ($B_1$) est estimé être peu probablement un point de texture ($B_2$) si le point homologue du point considéré sur la ligne précédente est un point qui est peu probablement un point de texture ($B_2$) ; et est estimé être très probablement un point de texture ($B_1$) dans les autres cas.

9. Dispositif détecteur de contour pour la mise en oeuvre du procédé selon la revendication 1, pour distinguer les points du type point de contour et les points du type point de texture dans une image vidéo, caractérisé en ce qu'il comporte :

- des moyens (2) de détection des points à fort gradient, recevant sur une entrée la valeur de la luminance de chaque point d'une image et la comparant par rapport à celle des points voisins et ayant une sortie fournissant un signal logique pour chaque point à fort gradient ;

- des moyens (3) de calcul d'un minorant, recevant sur une entrée le signal logique fourni par les moyens de détection (2) et fournissant sur une sortie une valeur $N_z$ minorant du nombre de points contenus dans une zone de points connexes à fort gradient, où est situé le point considéré ;

- des moyens (4) de détermination d'une première estimation du type d'un point à fort gradient, recevant sur une entrée la valeur $N_z$, la comparant à une valeur fixe $N_{S2}$, et fournissant sur une sortie un type estimé du point considéré ;

- des moyens (5 ou 6) de détermination d'une $j^{ième}$ estimation, j variant de 2 à p-1, ayant une entrée reliée à la sortie des moyens (4 ou 5) de détermination d'une $(j-1)^{ième}$ estimation et fournissant sur une sortie un type estimé du point considéré ;

- des moyens (7) de détermination d'une $p^{ième}$ estimation, ayant une première entrée reliée à la sortie des moyens (6) de détermination de la $(p-1)^{ième}$ estimation, et ayant une sortie couplée à la sortie du dispositif selon l'invention, pour fournir un type estimé du point considéré.

10. Dispositif selon la revendication 9, pour la mise en oeuvre du procédé selon la revendication 2, caractérisé en ce qu'il comporte en outre des moyens (8) de détermination d'une $(p+1)^{ième}$ estimation du type du point considéré, ayant une entrée reliée à la sortie des moyens (7) de détermination de la $p^{ième}$ estimation et ayant une sortie constituant la sortie du dispositif selon l'invention.

11. Dispositif selon la revendication 9, pour la mise en oeuvre du procédé selon la revendication 5, caractérisé en ce que les moyens (3) de détermination d'un minorant comportent :

- des moyens (11) de détermination du nombre de points à fort gradient connexes à un point à fort gradient considéré, ayant une entrée constituant l'entrée des moyens (3) de détermination d'un minorant et ayant une sortie ;

- des moyens (12) de calcul d'un premier minorant, ayant une première entrée reliée à la sortie des moyens (11) de détermination du nombre de points à fort gradient connexes, et ayant une deuxième entrée, une troisième entrée et une sortie ;

- un dispositif (14) à retard d'une ligne ayant une entrée et une sortie respectivement reliées à la sortie et à la deuxième entrée des moyens (12) de détermination d'un premier minorant ;

- un dispositif (13) à retard d'un point, ayant une entrée et une sortie reliées respectivement à la sortie et à la troisième entrée des moyens (12) de calcul d'un premier minorant ;

- un dispositif (15) de sélection d'un minorant, ayant une première entrée reliée à la sortie des moyens (12) de calcul d'un premier minorant, une seconde entrée reliée à la sortie du dispositif (14) à retard d'une ligne, et une sortie constituant la sortie des moyens (3) de détermination d'un minorant.

12. Dispositif selon la revendication 9, pour la mise en oeuvre du procédé selon la revendication 5, caractérisé en ce que les moyens (5, ou 6) de détermination d'une $j^{ième}$ estimation, $2 \leqslant j \leqslant p-1$, comportent :

- un dispositif (16) à retard d'une ligne ayant une entrée reliée à l'entrée des moyens (5 ou 6) de détermination d'une $j^{ième}$ estimation et ayant une sortie ;

- un premier dispositif (17) à retard d'un point ayant une entrée reliée à l'entrée des moyens (5 ou 6) de détermination d'une $j^{ième}$ estimation et ayant une sortie ;

- un deuxième dispositif (18) à retard d'un point, ayant une entrée reliée à la sortie du dispositif (16) à retard d'une ligne, et ayant une sortie ;

- un troisième dispositif (19) à retard d'un point, ayant une entrée et une sortie,

- une mémoire morte (20) ayant cinq entrées d'adresse reliées respectivement à la sortie du premier dispositif (17) à retard d'un point, à l'entrée des moyens (5) de détermination d'une $j^{ième}$ estimation, à la sortie du deuxième dispositif (18) à retard d'un point, à la sortie du dispositif (16) à retard d'une ligne, et à la sortie du troisième dispositif (19) à retard d'un point, et ayant une sortie constituant la sortie des moyens (5) de détermination d'une $j^{ième}$ estimation et reliée à l'entrée du troisième dispositif (19) à retard d'un point.

13. Dispositif selon la revendication 9, pour la mise en oeuvre du procédé selon la revendication 5, caractérisé en ce que les moyens (7) de détermination d'un $p^{ième}$ estimation comportent :

- un registre à décalage (21), à N' étages, ayant une entrée série constituant l'entrée des moyens (7) de détermination d'une $p^{ième}$ estimation et ayant N' sorties parallèles ;

- une mémoire (22) ayant N' entrées d'adresse reliées respectivement aux N' sorties du registre à décalage (21) et ayant une sortie

constituant la sortie des moyens (7) de détermination d'une $p^{ième}$ estimation .

14. Dispositif selon la revendication 10, caractérisé en ce que les moyens (8) de détermination d'une $(p+1)^{ième}$ estimation comportant :

- un dispositif (23) à retard d'une ligne ayant une entrée reliée à l'entrée des moyens (8) de détermination d'une $(p+1)^{ième}$ estimation, et ayant une sortie ;

- un circuit logique (24) ayant une première entrée reliée à l'entrée des moyens (8) de détermination d'une $(P + 1)^{ième}$ estimation, une deuxième entrée reliée à la sortie du dispositif à retard (23), et ayant une sortie constituant la sortie des moyens (8) de détermination d'une $(p+1)^{ième}$ détermination.

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 1 | 0 | 0 | 0 | 1 | 1 | 1 | 1 | 0 | 0 | 1 | 1 | 1 | 1 | 0 | 0 | 1 | 1 | 0 |
| 3 | 0 | 0 | 1 | 0 | 0 | 0 | 1 | 0 | 0 | 1 | 0 | 0 | 0 | 1 | 0 | 0 | 0 | 0 | 0 | 1 | 0 |
| 4 | 0 | 0 | 1 | 0 | 0 | 0 | 1 | 0 | 0 | 1 | 1 | 1 | 1 | 1 | 1 | 1 | 0 | 1 | 1 | 1 | 0 |
| 5 | 0 | 1 | 1 | 1 | 1 | 0 | 0 | 0 | 0 | 1 | 0 | 0 | 1 | 0 | 0 | 1 | 0 | 0 | 0 | 0 | 0 |
| 6 | 0 | 1 | 0 | 1 | 1 | 1 | 1 | 1 | 1 | 1 | 0 | 0 | 1 | 0 | 0 | 0 | 0 | 1 | 1 | 1 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

Fig.1

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 1 | 0 | 0 | 0 | 4 | 4 | 4 | 4 | 0 | 0 | 4 | 4 | 4 | 4 | 0 | 0 | 2 | 2 | 0 |
| 3 | 0 | 0 | 2 | 0 | 0 | 0 | 5 | 0 | 0 | 5 | 0 | 0 | 0 | 5 | 0 | 0 | 0 | 0 | 0 | 3 | 0 |
| 4 | 0 | 0 | 3 | 0 | 0 | 0 | 6 | 0 | 0 | 12 | 12 | 12 | 12 | 15 | 15 | 15 | 0 | 3 | 3 | 6 | 0 |
| 5 | 0 | 4 | 7 | 7 | 7 | 0 | 0 | 0 | 0 | 13 | 0 | 0 | 13 | 0 | 0 | 15 | 0 | 0 | 0 | 0 | 0 |
| 6 | 0 | 5 | 0 | 14 | 14 | 14 | 14 | 14 | 14 | 15 | 0 | 0 | 14 | 0 | 0 | 0 | 0 | 3 | 3 | 3 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

Fig.2

Nc

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 2 | 0 | 0 | 0 | 5 | 4 | 4 | 5 | 0 | 0 | 4 | 5 | 4 | 4 | 0 | 0 | 2 | 3 | 0 |
| 3 | 0 | 0 | 3 | 0 | 0 | 0 | 6 | 0 | 0 | 12 | 0 | 0 | 0 | 15 | 0 | 0 | 0 | 0 | 0 | 3 | 0 |
| 4 | 0 | 0 | 7 | 0 | 0 | 0 | 6 | 0 | 0 | 13 | 12 | 12 | 12 | 15 | 15 | 15 | 0 | 3 | 3 | 6 | 0 |
| 5 | 0 | 5 | 7 | 14 | 14 | 0 | 0 | 0 | 0 | 15 | 0 | 0 | 13 | 0 | 0 | 15 | 0 | 0 | 0 | 0 | 0 |
| 6 | 0 | 5 | 0 | 14 | 14 | 14 | 14 | 14 | 14 | 15 | 0 | 0 | 14 | 0 | 0 | 0 | 0 | 3 | 3 | 3 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

Fig.3

Nz

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | F | F | F | F | F | F | F | F | F | F | F | F | F | F | F | F | F | F | F | F | F |

Fig.4

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | F | F | F | F | F | F | F | F | F | F | F | F | F | F | F | F | F | F | F | F | F |
| 2 | F | F | B | F | F | F | B | B | B | B | F | F | B | B | B | B | F | F | B | B | F |

Fig.5

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | F | F | F | F | F | F | F | F | F | F | F | F | F | F | F | F | F | F | F | F | F |
| 2 | F | F | B | F | F | F | B | B | M | M | F | F | M | M | M | M | F | F | B | B | F |
| 3 | F | F | B | F | F | F | B | F | F | M | F | F | F | M | F | F | F | F | F | B | F |

Fig.6

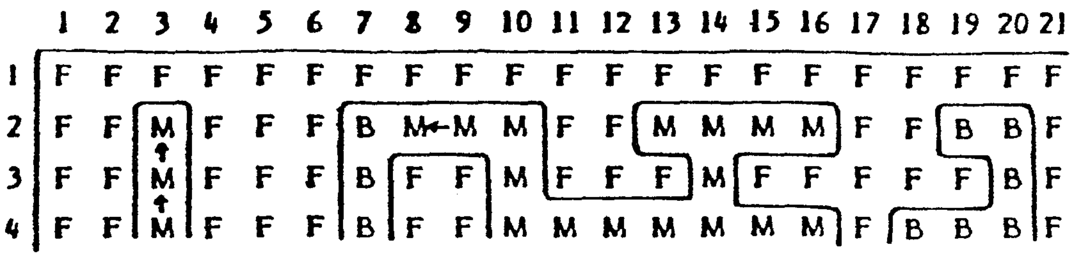


Fig.7

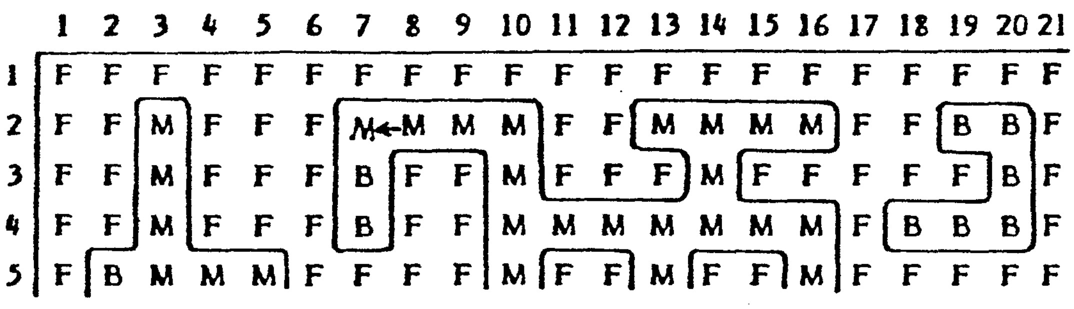


Fig.8

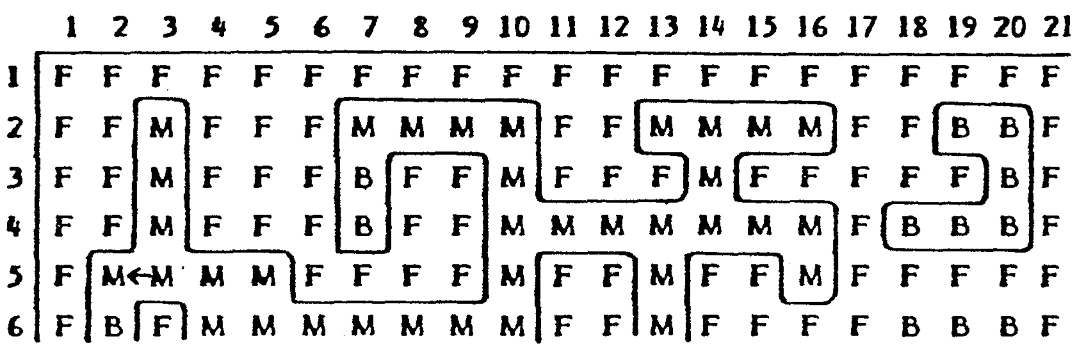


Fig.9

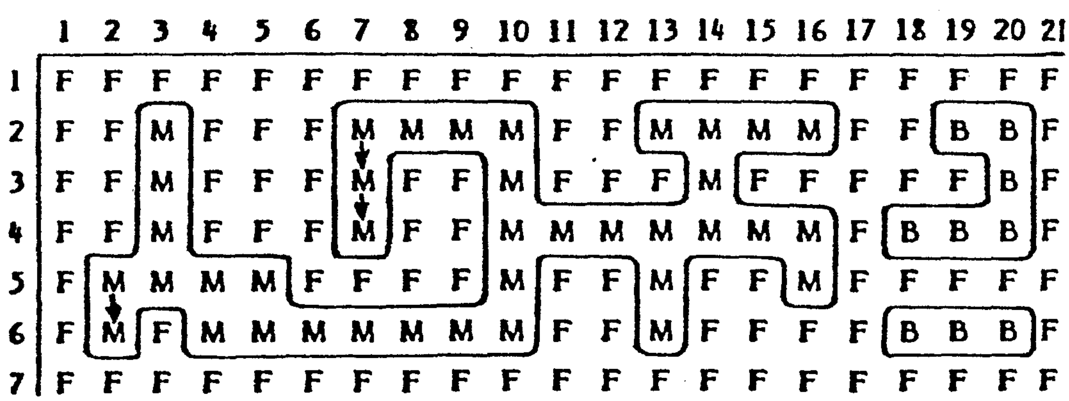


Fig.10

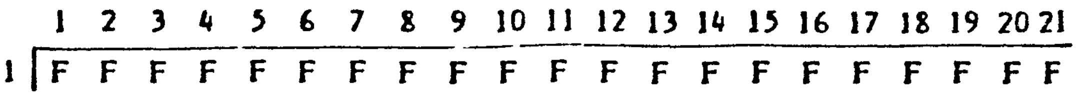


Fig.11

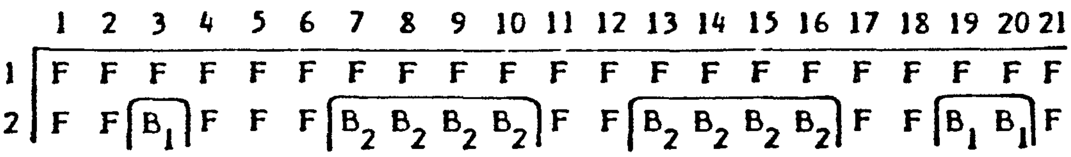


Fig.12

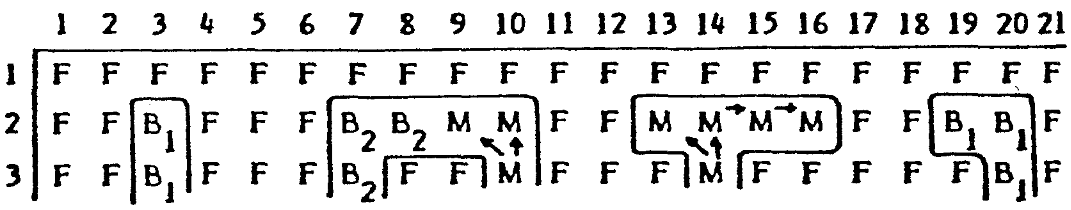


Fig.13

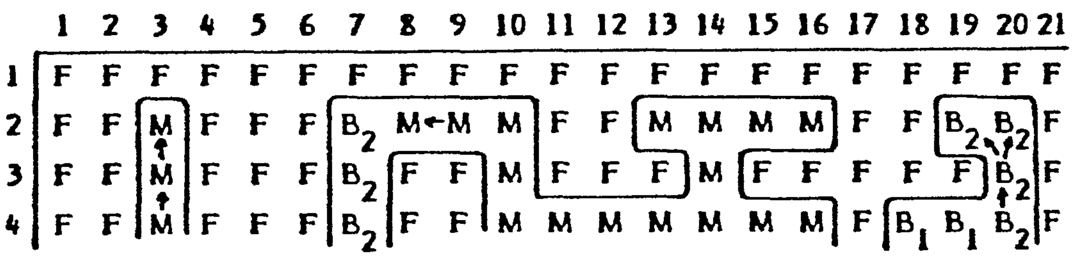


Fig.14

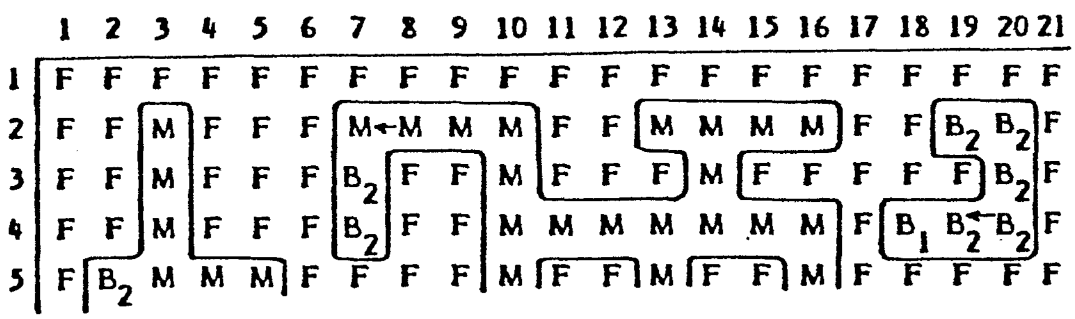


Fig.15

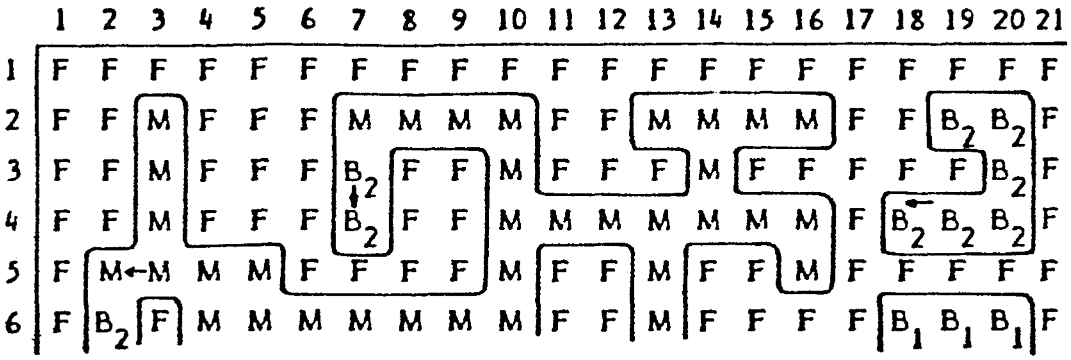
1 2 3 4 5 6 7 8 9 10 11 12 13 14 15 16 17 18 19 20 21
1 F F F F F F F F F F F F F F F F F F F F F
2 F F M F F F M M M M F F M M M M F F B2 B2 F
3 F F M F F F B2 F F M F F F M F F F F F B2 F
4 F F M F F F B2 F F M M M M M M M F B2 B2 B2 F
5 F M←M M M F F F F M F F M F F M F F F F F
6 F B2 F M M M M M M M F F M F F F F B1 B1 B1 F

Fig.16

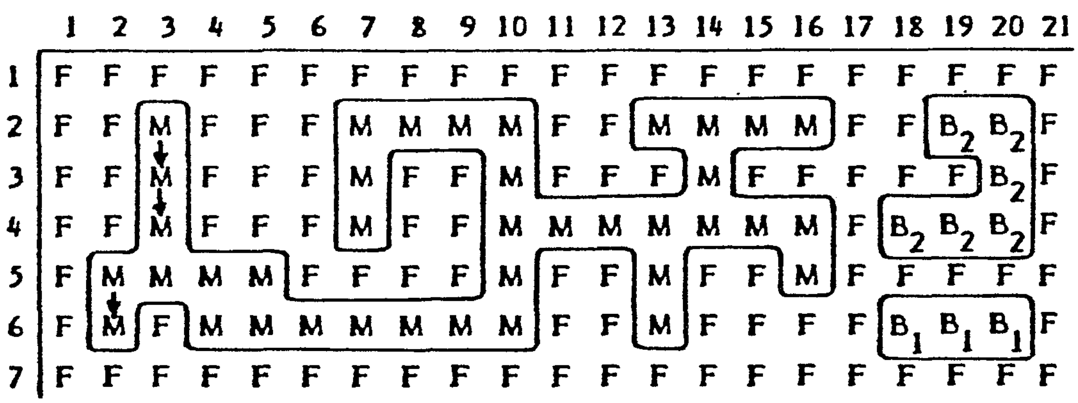
1 2 3 4 5 6 7 8 9 10 11 12 13 14 15 16 17 18 19 20 21
1 F F F F F F F F F F F F F F F F F F F F F
2 F F M F F F M M M M F F M M M M F F B2 B2 F
3 F F M F F F M F F M F F F M F F F F F B2 F
4 F F M F F F M F F M M M M M M M F B2 B2 B2 F
5 F M M M M F F F F M F F M F F M F F F F F
6 F M F M M M M M M M F F M F F F F B1 B1 B1 F
7 F F F F F F F F F F F F F F F F F F F F F

Fig.17

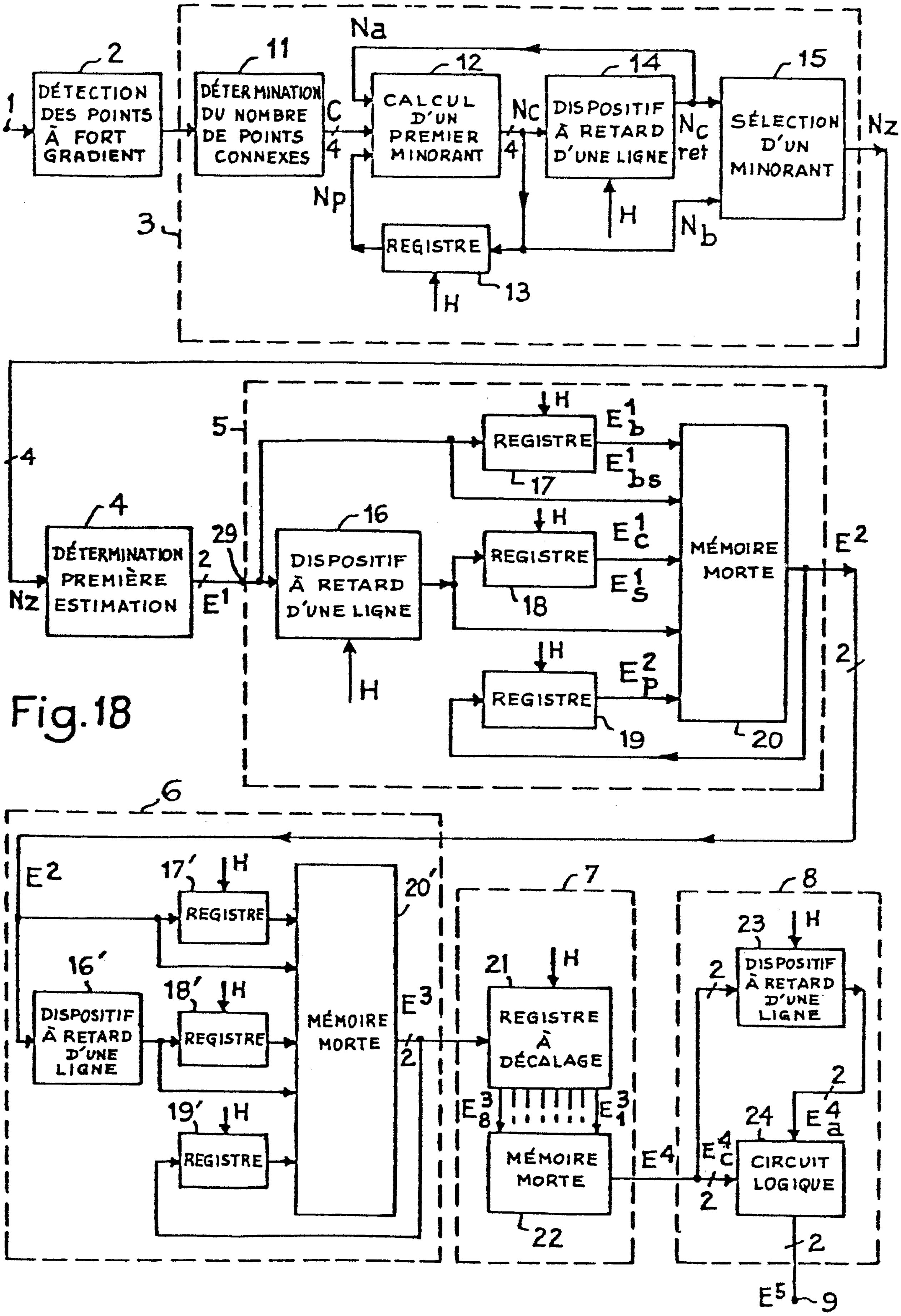
DÉTECTION DES POINTS À FORT GRADIENT
DÉTERMINATION DU NOMBRE DE POINTS CONNEXES
CALCUL D'UN PREMIER MINORANT
DISPOSITIF À RETARD D'UNE LIGNE
SÉLECTION D'UN MINORANT
REGISTRE
Na
Np
Nc
Nc ret
Nb
Nz
H
DÉTERMINATION PREMIÈRE ESTIMATION
DISPOSITIF À RETARD D'UNE LIGNE
REGISTRE
MÉMOIRE MORTE
E1
E2
REGISTRE À DÉCALAGE
MÉMOIRE MORTE
E3
E4
E5
CIRCUIT LOGIQUE


Fig.18

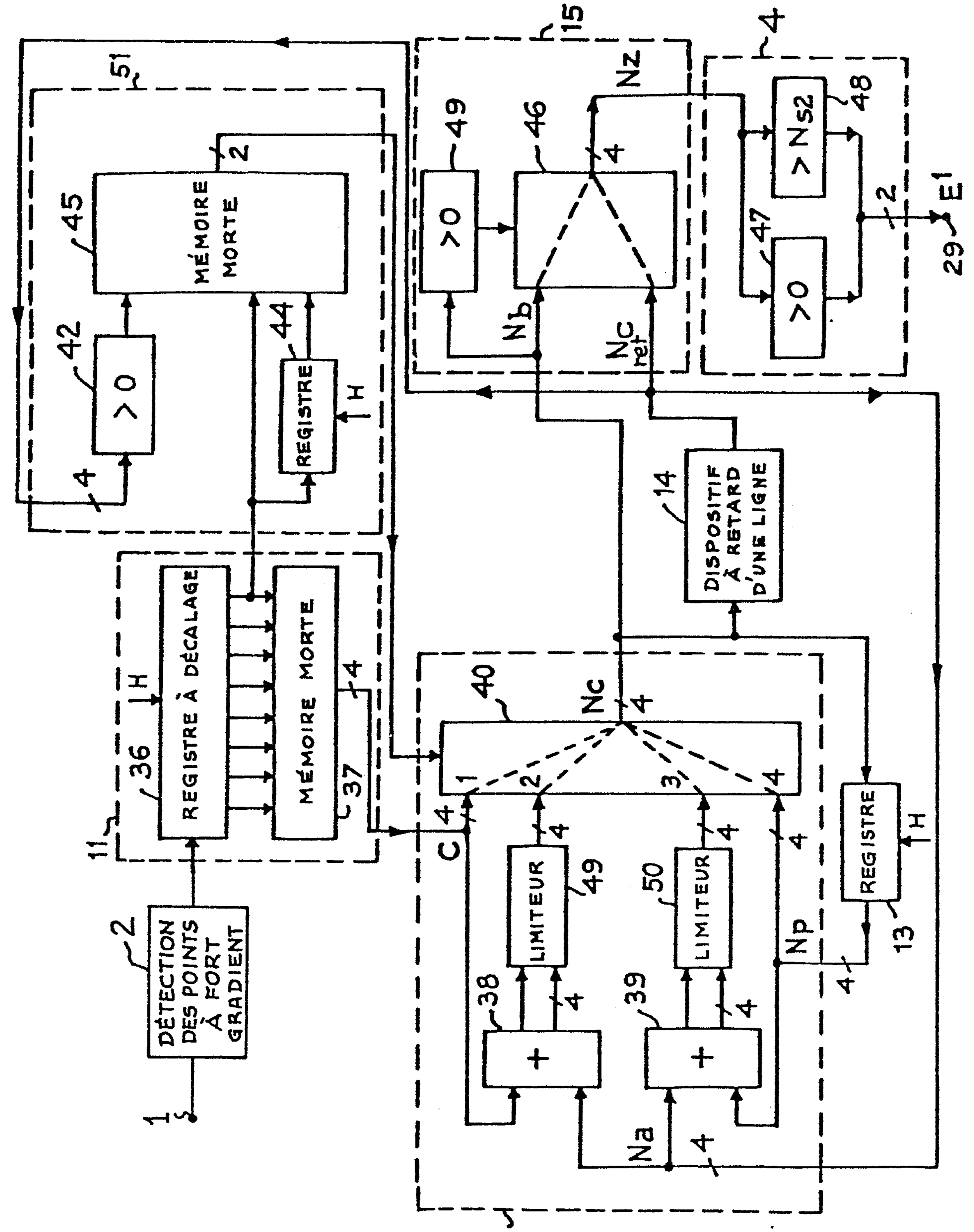
DÉTECTION DES POINTS À FORT GRADIENT
REGISTRE À DÉCALAGE
MÉMOIRE MORTE
MÉMOIRE MORTE
REGISTRE
>0
>0
>0
>Ns2
LIMITEUR
LIMITEUR
REGISTRE
DISPOSITIF À RETARD D'UNE LIGNE
Nb
Nc ret
Nz
Nc
Np
Na
C
H
E'
1
2
4
11
13
14
15
29
36
37
38
39
40
42
44
45
46
47
48
49
50
51
52

Fig.19

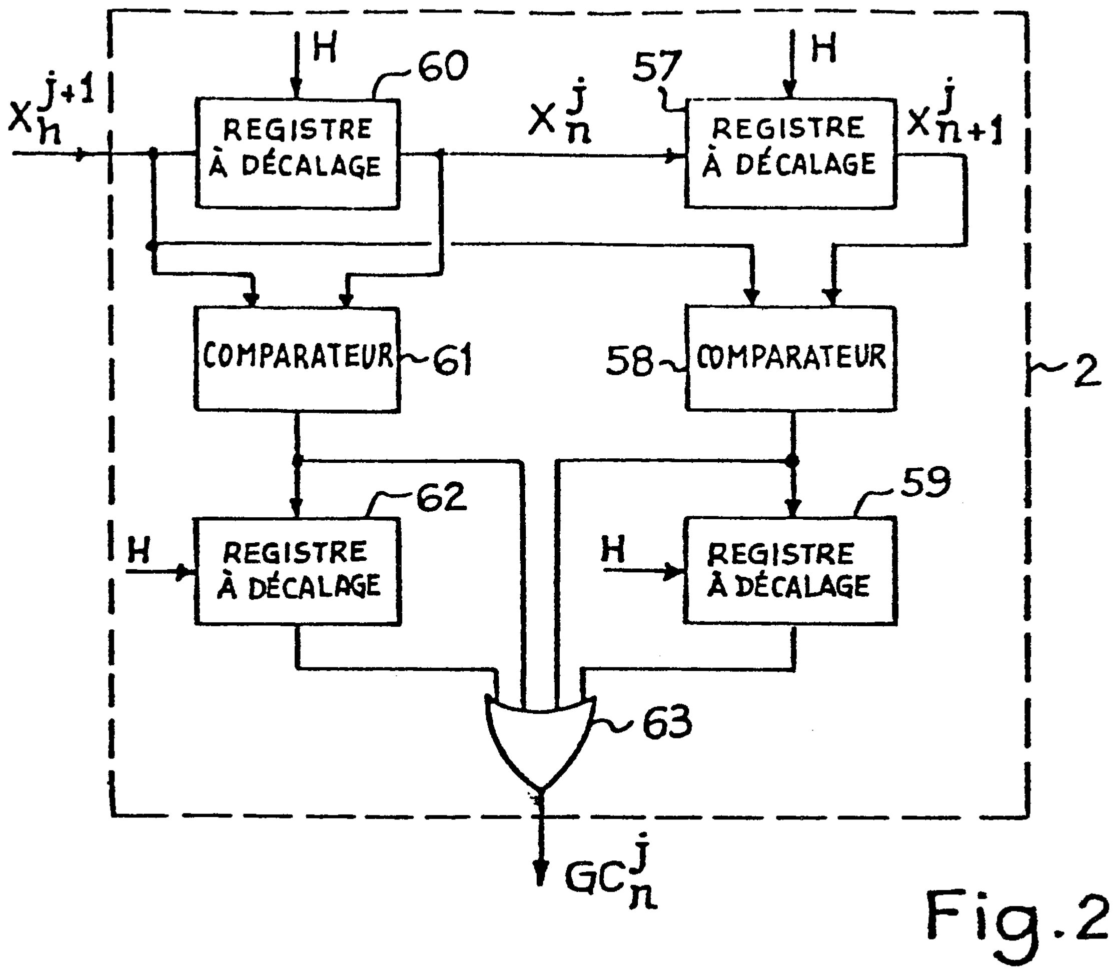


Fig. 20a

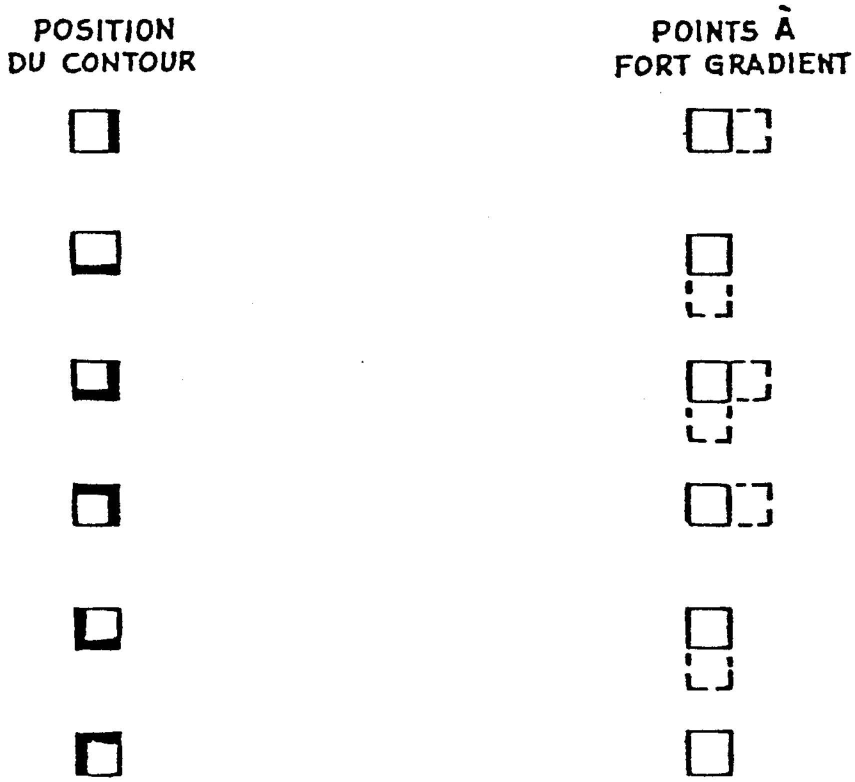


Fig. 20b